(19) Europäisches Patentamt
European Patent Office
Office européen des brevets

(11) **EP 4 585 484 A1**

(12) **EUROPEAN PATENT APPLICATION**
published in accordance with Art. 153(4) EPC

(43) Date of publication:
**16.07.2025   Bulletin 2025/29**

(51) International Patent Classification (IPC):
***B60W 60/00*** (2020.01)

(21) Application number: **23869820.3**

(22) Date of filing: **29.06.2023**

(86) International application number:
**PCT/CN2023/103770**

(87) International publication number:
**WO 2024/066572 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022   CN 202211214482**

(71) Applicant: **Huawei Technologies Co., Ltd.
Shenzhen, Guangdong 518129 (CN)**

(72) Inventors:
• **HAO, Donghao
Shenzhen, Guangdong 518129 (CN)**
• **ZHANG, Zhongshun
Shenzhen, Guangdong 518129 (CN)**
• **YANG, Shaoyu
Shenzhen, Guangdong 518129 (CN)**
• **CHENG, Siyuan
Shenzhen, Guangdong 518129 (CN)**
• **ZHANG, Hongbo
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **INTELLIGENT DRIVING DECISION-MAKING METHOD, DECISION-MAKING APPARATUS AND VEHICLE**

(57)     An intelligent driving decision-making method, a decision-making apparatus, and a vehicle are provided, and may be applied to the field of intelligent driving. The method includes: identifying an intent-indeterminate object (namely, a game object) and n road topologies owned by the object, determining an intent probability (n probabilities in total) that the game object travels along each road topology, constructing game sampling space including m game strategies, calculating strategy costs (n groups in total) of the m game strategies in each road topology, determining n target strategy costs that meet a preset condition, and determining an outcome of decision-making of an ego vehicle based on a target game strategy (one of the m game strategies). In this application, when an intent of the object is indeterminate, the intent probability of the intent-indeterminate object is inferred by using observed information, and indeterminate interactive game decision-making is performed based on the intent probability, to work out an optimal action of the ego vehicle. In this way, the ego vehicle can properly respond to a jump of an intent of a dynamic object, to reduce improper pulsating brakes and unwanted grab, thereby improving comfort, safety, and trafficability of the ego vehicle.

FIG. 5

**Description**

This application claims priority to Chinese Patent Application No. CN202211214482.1, filed with the China National Intellectual Property Administration on September 30, 2022 and entitled "INTELLIGENT DRIVING DECISION-MAKING METHOD, DECISION-MAKING APPARATUS, AND VEHICLE", which is incorporated herein by reference in its entirety.

**TECHNICAL FIELD**

This application relates to the field of intelligent driving, and in particular, to an intelligent driving decision-making method, a decision-making apparatus, and a vehicle.

**BACKGROUND**

With advent of intelligent driving, intelligent driving of vehicles becomes a hot research interest currently. Intelligent driving includes assisted driving and autonomous driving. Key technologies for implementing intelligent driving include a map and positioning, environmental perception, fusion and prediction, decision-making and planning, and underlying control.

At a conventional decision-making level, decision-making and planning methods applied to different scenarios are proposed by vendors, mainly including high-level semantic decision-making (such as lane change decision-making and lane keeping decision-making) and object-specific obstacle decision-making (such as avoidance/following or grab/yield). An object decision-making module tags a behavior of an obstacle, and provides a proper input for a motion planning module, to ensure that an autonomous vehicle properly responds to an ambient obstacle. Interactive decision-making in the industry is to work out an optimal game solution based on a dangerous intent/behavior of an ambient object, to strictly ensure safety. However, such interactive game inference is performed for a determinate intent that is assumed to be unchanged.

The decision-making manner above causes two serious problems. First, a conventional decision-making system usually works out an interactive game solution for a single determinate dangerous intent, and only the worst intent of an object is considered. Therefore, an outcome of decision-making is usually conservative and not human-like, resulting in a decrease in a trafficability of an ego vehicle in a complex environment. Second, only one intent of the object is considered. When an actual behavior of the object changes (that is, an intent of another vehicle changes suddenly) and is inconsistent with a specified intent, an input of decision-making changes stepwise and discontinuously, resulting in unrobust and unstable decision-making of the ego vehicle, for example, unwanted deceleration or unwanted avoidance. This degrades passenger experience.

**SUMMARY**

Embodiments of this application provide an intelligent driving decision-making method, a decision-making apparatus, and a vehicle, to infer, by using observed information, an intent probability of an intent-indeterminate object when an intent of the ambient dynamic object (namely, a game object) is indeterminate/unclear, and perform indeterminate interactive game decision-making based on the intent probability, so as to work out an optimal action of an ego vehicle (that is, determine an outcome of decision-making of the ego vehicle based on a target game strategy). In this way, the autonomous vehicle can properly respond to a jump of the intent of the dynamic object, to reduce improper pulsating brakes and unwanted grab, thereby improving comfort, safety, and trafficability of the autonomous vehicle.

In view of this, embodiments of this application provide the following technical solutions.

According to a first aspect, embodiments of this application first provide an intelligent driving decision-making method, and the method may be applied to the field of intelligent driving. The method includes: First, an ego vehicle may determine a game object based on collected perception data and topology information obtained from an upstream module, and obtain real-time status information (for example, one or more of real-time position information, a real-time orientation angle, a real-time speed, and a real-time acceleration) of the game object, where the game object is an obstacle having n (n≥2) road topologies. Then, the ego vehicle may determine, based on the real-time status information of the game object, an intent probability that the game object travels along each road topology, to obtain n intent probabilities. After obtaining the real-time status information of the game object, the ego vehicle may further obtain real-time status information of the ego vehicle (for example, vehicle information of the ego vehicle collected by a sensor system of the ego vehicle), and construct game sampling space for the game object based on the real-time status information of the ego vehicle and the real-time status information of the game object (road condition information may also be added), where the game sampling space includes m (m≥1) game strategies, and the game strategy is an action pair formed by each feasible action of the ego vehicle and a feasible action of the game object. After the game sampling space including the m game strategies is constructed, for each combination of horizontal and vertical actions of the ego vehicle and horizontal and vertical actions of the game object, a strategy cost of the combination in each road topology is evaluated, to obtain n groups of strategy costs, where each group of strategy costs includes m strategy costs that are in a one-to-one correspondence with the m game strategies. Finally, n target strategy costs corresponding to a total cost that meets a preset condition are determined based on the n intent probabilities and the n groups of strategy costs, and an outcome of decision-making of the ego vehicle is determined based on a target game strategy, where the n target strategy costs are strategy costs of a target game strategy in all the road topologies, and the target game strategy is one of the m game strategies. It should be noted herein that, when n=1, the foregoing game object is an intent-determinate obstacle. In this case, the obstacle has only one road topology (that is, n=1), and a calculated intent probability that the obstacle travels along the unique road topology is determined, and is 100%. Subsequent processes such as working out a game solution and determining an outcome of decision-making of a downstream task based on the intent probability are similar, and details are not described herein again.

In the foregoing implementation of this application, when an intent of an ambient dynamic object (namely, the game object) is indeterminate/unclear, intent probabilities of the game object can be quickly and efficiently identified by using observed information (namely, the real-time status information of the game object), and a stable decision is made based on the intent probabilities, to work out an optimal action of the ego vehicle (that is, determine the outcome of decision-making of the ego vehicle based on the target game strategy). In this way, the autonomous vehicle can properly respond to a jump of the intent of the dynamic object, to reduce improper pulsating brakes and unwanted grab, thereby ensuring comfort, safety, and trafficability of the vehicle.

In a possible implementation of the first aspect, an implementation of determining, based on the real-time status information of the game object, an intent probability that the game object travels along each road topology may be as follows: First, the ego vehicle obtains feature reference information of the game object in each road topology, where the feature reference information is used to describe a datum status of an intent of the game object to travel along each road topology in a current traffic environment status. Then, the ego vehicle determines, based on the real-time status information of the game object and the feature reference information, the intent probability that the game object travels along each road topology.

In the foregoing implementation of this application, that each intent probability of the game object may be determined based on the feature reference information of the game object in each road topology owned by the game object is specifically described. The feature reference information is easy to obtain, easy to calculate, and operable.

In a possible implementation of the first aspect, an implementation of determining, based on the real-time status information of the game object and the feature reference information, the intent probability that the game object travels along each road topology may be as follows: First, a target eigenvector is obtained based on the real-time status information of the game object and the feature reference information obtained through calculation in the foregoing manner. Then, a likelihood probability of the target eigenvector is determined based on a probability density distribution dataset constructed in advance, where the probability density distribution dataset includes probability density distribution of eigenvectors with different eigenvector values. Finally, the intent probability that the game object travels along each road topology is determined based on the likelihood probability.

In the foregoing implementation of this application, that the likelihood probability of the target eigenvector may be first obtained, and then the intent probability is obtained based on the likelihood probability is specifically described. Accordingly, the intent of the game object can be effectively identified, which is simple and effective.

In a possible implementation of the first aspect, the probability density distribution dataset includes a nonlinear probability density distribution dataset, where the nonlinear probability density distribution dataset includes probability density distribution of eigenvectors with different speed values and different eigenvector values.

In the foregoing implementation of this application, it is considered that the eigenvector and the likelihood probability distribution may have different distribution forms at different speeds of the game object. This better accommodates to an actual application scenario, thereby improving accuracy of calculating the intent probability.

In a possible implementation of the first aspect, an implementation of the determining, based on the likelihood probability, the intent probability that the game object travels along each road topology may be as follows: First, a prior intent probability that the obstacle travels along each road topology is obtained. Then, the intent probability that the game object travels along each road topology is calculated based on the likelihood probability and the prior intent probability by using a Bayesian inference algorithm.

In the foregoing implementation of this application, the prior intent probability is introduced. This can further improve the accuracy of calculating the intent probability.

In a possible implementation of the first aspect, the feature reference information is obtained based on a target road point in each road topology, or the feature reference information is obtained based on a road congestion degree and/or a radical degree of a traveling style of the game object. It should be noted that, in embodiments of this application, the feature reference information of the game object in each road topology may be directly obtained through calculation based on the road congestion degree and/or the radical degree of the traveling style of the game object. Alternatively, initial feature reference information may be first obtained based on a target road point in each road topology, and then further optimization and adjustment are performed based on the road congestion degree and/or the radical degree of the traveling style of the game object, so that optimized feature reference information more properly represents a feature of each intent in a current traffic environment status, to better accommodate to an actual situation.

In the foregoing implementation of this application, several implementations of obtaining the feature reference information are specifically described. This implements flexibility.

In a possible implementation of the first aspect, the real-time status information of the game object includes at least any one or more of the following: real-time position information of the game object, a real-time orientation angle of the game object, a real-time speed of the game object, and a real-time acceleration of the game object. The feature reference information includes at least any one or more of the following: reference position information of the game object, a reference orientation angle of the game object, a reference speed of the game object, and a reference acceleration of the game object.

In the foregoing implementation of this application, several possible types of the real-time status information and the feature reference information of the game object are specifically described. This implements universality.

In a possible implementation of the first aspect, when no obstacle other than the ego vehicle exists around the game object, a value of the reference speed of the game object is obtained through calculation based on a kinematic constraint on the game object and/or an environmental traffic constraint on the game object.

In the foregoing implementation of this application, that when no other obstacles exist, a constraint on the reference speed of the game object is the kinematic constraint and the environmental traffic constraint is specifically described. This accommodates to an actual application scenario and implements realizability.

In a possible implementation of the first aspect, the kinematic constraint includes at least any one or more of the following: a lane topology curvature speed limit, a start acceleration constraint, and a red-light deceleration constraint. The environmental traffic constraint includes at least any one or more of the following: a road speed limit of a lane in which the game object is located, a speed constraint on a preceding vehicle in the lane in which the game object is located, and a speed constraint on an obstacle in a lane other than the lane in which the game object is located.

In the foregoing implementation of this application, existence forms of the kinematic constraint and the environmental traffic constraint are specifically described. This implements universality.

In a possible implementation of the first aspect, when at least one obstacle located in front of the game object (which may be referred to as a first target obstacle, and one or more first target obstacles may exist) exists in the n road topologies owned by the game object, it is necessary to first determine whether a distance between the first target obstacle and the game object is a safe distance. If the distance is a safe distance, the reference speed of the game object is obtained based on a speed of the one or more first target obstacles.

In the foregoing implementation of this application, that when another obstacle exists and the obstacle is in the road topology of the game object, the reference speed of the game object is constrained by the speed of the preceding vehicle if the distance from the preceding vehicle is shorter than the safe distance is specifically described. This accommodates to an actual application scenario and implements realizability.

In a possible implementation of the first aspect, the game object has the n road topologies. When at least one obstacle (which may be referred to as a second target obstacle, and one or more second target obstacles may exist) exists in a traveling direction that is the same as that of the game object, and a road topology owned by the at least one second target obstacle does not belong to the n road topologies, the ego vehicle may first obtain a datum speed of each second target obstacle according to a preset method, and then obtain the reference speed of the game object based on each datum speed.

In the foregoing implementation of this application, that when another obstacle exists and the obstacle and the game object travel in parallel in a same direction, the reference speed of the game object is constrained by a datum speed of the obstacle traveling in parallel with the game object is specifically described. This accommodates to an actual application scenario and implements realizability.

In a possible implementation of the first aspect, the game object has the n road topologies. When at least one obstacle (which may be referred to as a third target obstacle, and one or more third target obstacles may exist) exists in a crossing traveling direction of the game object, the ego vehicle may first determine whether a difference between moments at which the game object and the at least one third target obstacle reach a predicted collision point is greater than a preset threshold. If the difference between the moments at which the game object and the at least one third target obstacle reach the predicted collision point is greater than the preset threshold, the reference speed of the game object may be the real-time speed of the game object. It should be noted that the real-time speed of the game object herein is not a speed of the game object that is observed by the ego vehicle at the beginning, but an actual speed value of the game object obtained when the vehicle travels at each current moment.

In the foregoing implementation of this application, that when another obstacle exists and the obstacle is a crossing vehicle of the game object, a constraint on the reference speed of the game object is as follows is specifically described: If the difference between the moments at which the two reach the predicted collision point is greater than the preset threshold, it indicates safety, and the game object may maintain the current vehicle speed. This accommodates to an actual application scenario and implements realizability.

In a possible implementation of the first aspect, the game object has the n road topologies. When at least one obstacle (which may be referred to as a third target obstacle, and one or more third target obstacles may exist) exists in a crossing traveling direction of the game object, the ego vehicle may first determine whether a difference between moments at which the game object and the at least one third target obstacle reach a predicted collision point is greater than a preset threshold. If the difference between the moments at which the game object and the at least one third target obstacle reach the predicted collision point is less than or equal to the preset threshold, the reference speed of the game object is obtained based on the real-time speed of the game object, and the reference speed needs to be lower than the real-time speed of the game object. Similarly, the real-time speed of the game object herein is not a speed of the game object observed by the ego vehicle at the beginning, but an actual speed value of the game object obtained when the vehicle travels at each current moment.

In the foregoing implementation of this application, that when another obstacle exists and the obstacle is a crossing vehicle of the game object, a constraint on the reference speed of the game object is as follows is specifically described: If the difference between the moments at which the two reach the predicted collision point is less than or equal to the preset threshold, the game object may decelerate for yield. This accommodates to an actual application scenario and implements realizability.

In a possible implementation of the first aspect, an implementation of the determining, based on the n intent probabilities and the n groups of strategy costs, n target strategy costs corresponding to a total cost that meets a preset condition may be as follows: The n intent probabilities are respectively used as weights of the n road topologies, and a weighted strategy cost corresponding to each game strategy in the n groups of strategy costs is calculated, to obtain m total costs. Then, a total cost with a minimum value is determined from the m total costs. Finally, the n target strategy costs corresponding to the total cost with the minimum value are further determined.

In the foregoing implementation of this application, the determinate interactive game solution is combined with the intent probability to form a framework of indeterminate interactive game, to work out an optimal decision under an indeterminate intent, thereby improving correctness of vehicle decision-making.

In a possible implementation of the first aspect, an implementation of calculating strategy costs of the m game strategies in each road topology may be as follows: Factors of the strategy costs of the m game strategies in each road topology are determined, such as at least one or more of safety, comfort, trafficability, a right of way, a horizontal offset, a risk area, and an inter-frame association. Then, a factor cost of each factor in each strategy cost is calculated, where a manner of calculating the factor cost may be determining a weight of each factor in advance, for example, a safety weight, a comfort weight, a trafficability weight, a right-of-way weight, a horizontal offset weight, a risk area weight, and an inter-frame association weight (values of the weights may be different). The factor cost of each factor in each strategy cost is weighted based on each weight, to obtain the strategy costs of the m game strategies in each road topology.

In the foregoing implementation of this application, that the strategy cost is a weighted sum of all factor costs is specifically described. In this way, a finally obtained strategy cost better accommodates to a vehicle driving habit and helps meet a driving safety requirement.

In a possible implementation of the first aspect, an implementation of constructing game sampling space for the game object based on the real-time status information of the ego vehicle and the real-time status information of the game object may be as follows: First, a decision-making upper limit and a decision-making lower limit of the ego vehicle and the game object are determined based on the real-time status information of the ego vehicle and the real-time status information of the game object. Then, a decision-making strategy of the ego vehicle and a decision-making strategy of the game object are obtained from the decision-making upper limit and the decision-making lower limit according to a preset rule. Finally, the decision-making strategy of the ego vehicle and the decision-making strategy of the game object (also referred to as an action pair or an action combination) are combined, to obtain the m game strategies of the ego vehicle and the game object, where the m game strategies belong to the game sampling space.

In the foregoing implementation of this application, kinematic deduction is performed on all feasible space of the ego vehicle and the game vehicle, and the m game strategies are formed based on a future motion interaction status. On the basis of this, the strategy cost of each game strategy may be inferred through calculation based on the m game strategies. In this way, a stable decision can be made during a change of an object intent. This resolves a problem of a conservative pulsating brake in conventional determinate decision-making, thereby ensuring safety, comfort, and trafficability.

In a possible implementation of the first aspect, an implementation of determining a game object may be as follows: The ego vehicle may first obtain all road topologies in a range of a preset area around the ego vehicle (for example, within a range of a radius of 10 m around the ego vehicle), then obtain obstacle information of the obstacle (for example, at least one obstacle) perceived around the ego vehicle, and calculate a road topology of each obstacle based on the obtained obstacle information and all the obtained road topologies. If an obstacle having n road topologies exists, the obstacle having the n road topologies is determined to be the game object. A process of determining a game object may also be referred to as a process of identifying a road topology of an object and identifying an intent-indeterminate object.

In the foregoing implementation of this application, an implementation of determining the game object is specifically described. This implements realizability.

According to a second aspect of embodiments of this application, a decision-making apparatus is provided. The decision-making apparatus has a function of implementing the method according to any one of the first aspect or the possible implementations of the first aspect. The function may be implemented by hardware, or may be implemented by hardware executing corresponding software. The hardware or the software includes one or more modules corresponding to the function.

According to a third aspect of embodiments of this application, a vehicle traveling control method is provided. The method includes: obtaining an obstacle outside a vehicle; for the obstacle, determining an outcome of decision-making for traveling of the vehicle according to the method according to any one of the first aspect or the possible implementations of the first aspect; and finally, controlling traveling of the vehicle based on the outcome of decision-making.

According to a fourth aspect of embodiments of this application, a vehicle traveling control apparatus is provided. The vehicle traveling control apparatus has a function of implementing the method according to the third aspect. The function may be implemented by hardware, or may be implemented by hardware executing corresponding software. The hardware or the software includes one or more modules corresponding to the function.

According to a fifth aspect of embodiments of this application, a vehicle is provided, including the vehicle traveling control apparatus provided in the fourth aspect and a traveling system. The vehicle traveling control apparatus controls the traveling system.

According to a sixth aspect of embodiments of this application, a computing device is provided, and may include a memory, a processor, and a bus system. The memory is configured to store a program. The processor is configured to invoke the program stored in the memory, to perform the method according to any one of the first aspect or the possible implementations of the first aspect of embodiments of this application, or the processor is configured to invoke the program stored in the memory, to perform the method according to the third aspect of embodiments of this application.

According to a seventh aspect of embodiments of this application, an intelligent driving system is provided. The intelligent driving system includes a sensing system and a processor. The processor is configured to invoke a program stored in a memory, to perform the method according to any one of the first aspect or the possible implementations of the first aspect of embodiments of this application, or the processor is configured to invoke the program stored in the memory, to perform the method according to the third aspect of embodiments of this application.

According to an eighth aspect of embodiments of this application, a computer-readable storage medium is provided. The computer-readable storage medium stores instructions, and when the instructions are run on a computer, the computer is enabled to perform the method according to any one of the first aspect or the possible implementations of the first aspect, or the computer is enabled to perform the method according to the third aspect of embodiments of this application.

According to a ninth aspect of embodiments of this application, a computer program is provided. When the computer program is run on a computer, the computer is enabled to perform the method according to any one of the first aspect or the possible implementations of the first aspect, or the computer is enabled to perform the method according to the third aspect of embodiments of this application.

According to a tenth aspect of embodiments of this application, a chip is provided. The chip includes at least one processor and at least one interface circuit. The interface circuit is coupled to the processor. The at least one interface circuit is configured to perform a transceiver function and send instructions to the at least one processor. The at least one processor is configured to run a computer program or the instructions, and has a function of implementing the method according to any one of the first aspect or the possible implementations of the first aspect, or has a function of implementing the method according to the third aspect. The function may be implemented by hardware, or may be implemented by software, or may be implemented by a combination of hardware and software. The hardware or the software includes one or more modules corresponding to the function. In addition, the interface circuit is configured to communicate with a module other than the chip. For example, the interface circuit may send, to a downstream control module of an ego vehicle, a game strategy obtained by the processor on the chip, to perform motion control (such as avoidance, following, grab, or yield).

## BRIEF DESCRIPTION OF DRAWINGS

FIG. 1 is a diagram of a system architecture according to an embodiment of this application;
FIG. 2 shows a typical application scenario according to an embodiment of this application;
FIG. 3 shows another typical application scenario according to an embodiment of this application;
FIG. 4 shows another typical application scenario according to an embodiment of this application;
FIG. 5 is a schematic flowchart of an intelligent driving decision-making method according to an embodiment of this application;

FIG. 6 is a diagram of an instance of determining a game object according to an embodiment of this application;

FIG. 7 is a diagram of another instance of determining a game object according to an embodiment of this application;

FIG. 8 is a diagram of a relationship between a target eigenvector and likelihood probability distribution in a straight-through scenario and a left-turn scenario according to an embodiment of this application;

FIG. 9 is a diagram of a relationship between a target eigenvector and likelihood probability distribution in a straight-through scenario and a left-turn scenario obtained at different speeds according to an embodiment of this application;

FIG. 10 is a diagram of a relationship between a speed of a game object and position probability density distribution of a straight-through intent according to an embodiment of this application;

FIG. 11 is a diagram of a relationship between a speed of a game object and orientation angle probability density distribution of a straight-through intent according to an embodiment of this application;

FIG. 12 is a diagram of a relationship between a speed of a game object and speed probability density distribution of a straight-through intent according to an embodiment of this application;

FIG. 13 is a diagram of horizontal feasible space sampling on an ego vehicle and a game object according to an embodiment of this application;

FIG. 14 is a diagram of performing horizontal position offset sampling and vertical acceleration offset sampling on an ego vehicle and a game object according to an embodiment of this application;

FIG. 15 is a diagram of a safety cost function obtained after normalization processing according to an embodiment of this application;

FIG. 16 is a diagram of a comfort cost function obtained after normalization processing according to an embodiment of this application;

FIG. 17 is a diagram of a trafficability cost function obtained after normalization processing according to an embodiment of this application;

FIG. 18 is a diagram of a right-of-way cost function obtained after normalization processing according to an embodiment of this application;

FIG. 19 is a diagram of a horizontal offset cost function obtained after normalization processing according to an embodiment of this application;

FIG. 20 is a diagram of an inter-frame association cost function obtained after normalization processing according to an embodiment of this application;

FIG. 21 is a diagram of a strategy feasible field of a crossing game object according to an embodiment of this application;

FIG. 22 is another diagram of performing horizontal position offset sampling and vertical acceleration offset sampling on an ego vehicle and a game object according to an embodiment of this application;

FIG. 23 is a diagram of an architecture of a core procedure of an intelligent driving decision-making method according to an embodiment of this application;

FIG. 24 is a diagram of a structure of a decision-making apparatus according to an embodiment of this application;

FIG. 25 is a schematic flowchart of a vehicle traveling control method according to an embodiment of this application;

FIG. 26 is a diagram of a structure of a vehicle traveling control apparatus according to an embodiment of this application;

FIG. 27 is a diagram of a structure of a vehicle according to an embodiment of this application; and

FIG. 28 is a diagram of a structure of a computing device according to an embodiment of this application.

## DESCRIPTION OF EMBODIMENTS

Embodiments of this application provide an intelligent driving decision-making method, a decision-making apparatus, and a vehicle, to infer, by using observed information, an intent probability of an intent-indeterminate object when an intent of the ambient dynamic object (namely, a game object) is indeterminate/unclear, and perform indeterminate interactive game decision-making based on the intent probability, so as to work out an optimal action of an ego vehicle (that is, determine an outcome of decision-making of the ego vehicle based on a target game strategy). In this way, the autonomous vehicle can properly respond to a jump of the intent of the dynamic object, to reduce improper pulsating brakes and unwanted grab, thereby improving comfort, safety, and trafficability of the autonomous vehicle.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have", and any other variants are intended to cover the non-exclusive inclusion, so that a process, method, system, product, or device that includes a series of units is not necessarily limited to those units, but may include other units not expressly listed or inherent to such a process, method, system, product, or device.

To better understand solutions in embodiments of this application, the following first describes related terms and concepts that may be used in embodiments of this application. It should be understood that related concept explanation may be limited due to specific situations of embodiments of this application, but this does not mean that this application is limited to only these specific situations, and specific situations of different embodiments may differ. This is not specifically limited herein.

(1) Object decision-making

In an autonomous navigation process, an autonomous vehicle needs to make a decision on an obstacle in an environment and tag a behavior of the obstacle, for example, decide to take an action of bypassing/following/getting the grab on an obstacle. This process is referred to as object decision-making.

(2) Game strategy

The game strategy indicates possible behaviors of the autonomous vehicle and a game object in a game process. In embodiments of this application, the game strategy is k1 sampled actions of the game object and k2 sampled actions of the autonomous vehicle, to form k1*k2 game strategies. A game strategy may also be referred to as a "game action pair". A set including the k1*k2 game strategies may be referred to as game sampling space.

(3) Reference path

The reference path is a datum reference used by the autonomous vehicle for object decision-making, for example, a center line of a current road. The path mainly reflects real map information and may guide a traveling direction of the autonomous vehicle, but has no obstacle avoidance function.

(4) Horizontal

"Horizontal" is a direction parallel to the reference path, and corresponds to a behavior, for example, obstacle avoidance or bypassing, of the autonomous vehicle.

(5) Vertical

"Vertical" is a direction along the reference path, and corresponds to an acceleration or deceleration behavior of the autonomous vehicle.

(6) Intent

The intent is a high-level behavior decision to be made by an ambient traffic participant in the future, for example, straight-through, left-turn, right-turn, or U-turn.

(7) Road topology

The road topology is geometric information of roads and a correlation between the roads, for example, a left-turn lane and a right-turn lane.

(8) Ego vehicle

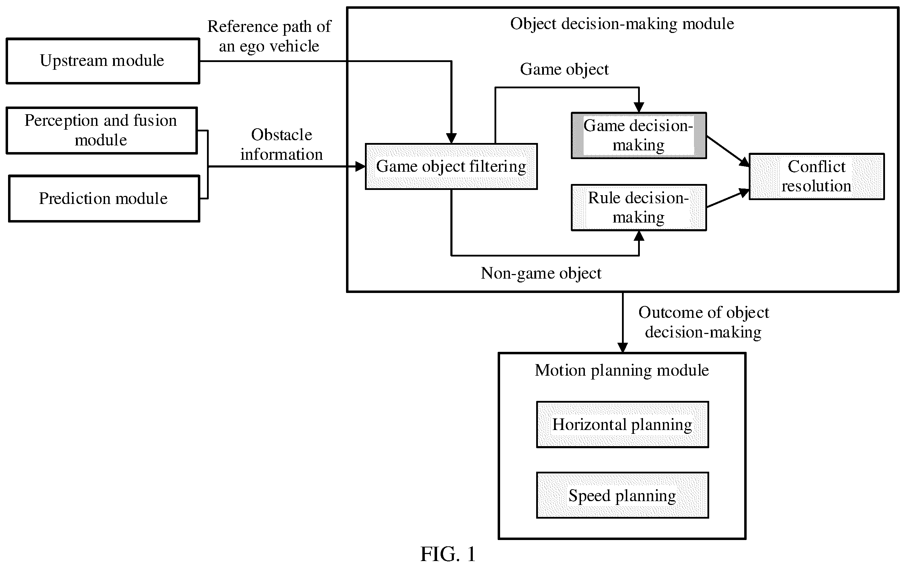

The ego vehicle is an autonomous vehicle on which the method in embodiments of this application takes effect.
The following describes embodiments of this application with reference to the accompanying drawings. A person of ordinary skill in the art may learn that, with development of technologies and emergence of a new scenario, technical solutions provided in embodiments of this application are also applicable to a similar technical problem.
First, a system architecture of this application is described. For details, refer to FIG. 1. A decision-making apparatus provided in embodiments of this application may belong to an object decision-making module in an autonomous driving system, or may be independently deployed. This is not limited in this application. For ease of description, an example in which the decision-making apparatus belongs to an object decision-making module in an autonomous driving system is used. Specifically, the object decision-making module determines, based on a reference path of an ego vehicle input by an upper-layer module and obstacle information obtained by a perception/fusion module and a prediction module, whether the ego vehicle is about to conflict with an obstacle when traveling along the reference path. If the ego vehicle is about to conflict with the obstacle, the obstacle is classified into a game/non-game object. For a game object, the intelligent driving decision-making method described in embodiments of this application is performed. For a non-game object, rule-based object decision-making is performed (this part is not described in detail in this application). Then, a conflict resolving module is used to resolve a scenario in which outcomes of decision-making of a plurality of objects conflict. According to the intelligent driving decision-making method provided in embodiments of this application, outcomes of object decision-making are output, for example, the following behavior tags: grab/yield or obstacle avoidance/following. The outcomes of object decision-making are input to a motion planning module. The motion planning module plans motion of the object based on the behavior tag of the obstacle to implement an action of the ego vehicle of getting the grab on/yielding to or avoiding/following the object.

It should be noted that, as an algorithm, the intelligent driving decision-making method provided in embodiments of this application may be run in an in-vehicle computer system, and computing power of the computer system may ensure an update rate of at least 30 Hz for the algorithm.

It should be further noted that the system architecture shown in FIG. 1 is merely an example. During actual application, more or fewer subsystems or modules may be included, and each subsystem or module may include a plurality of components. This is not specifically limited herein.

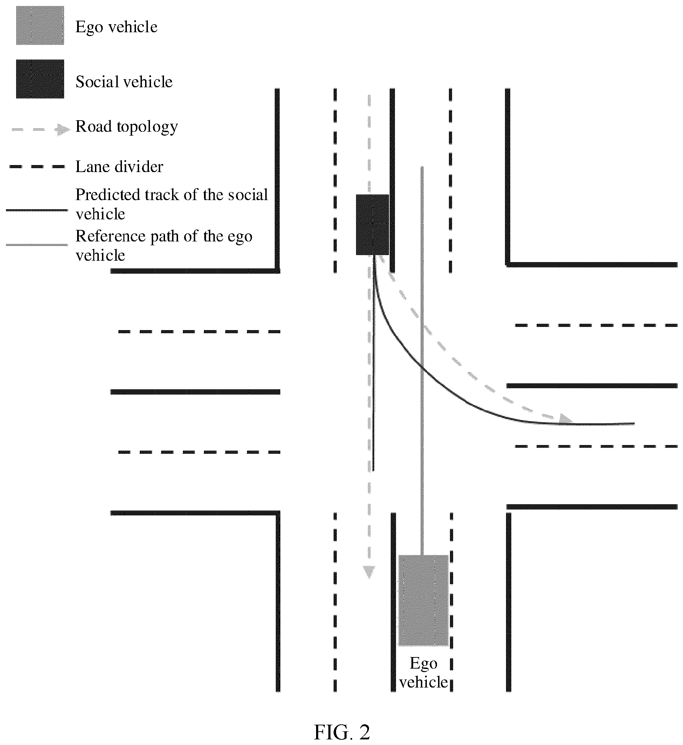

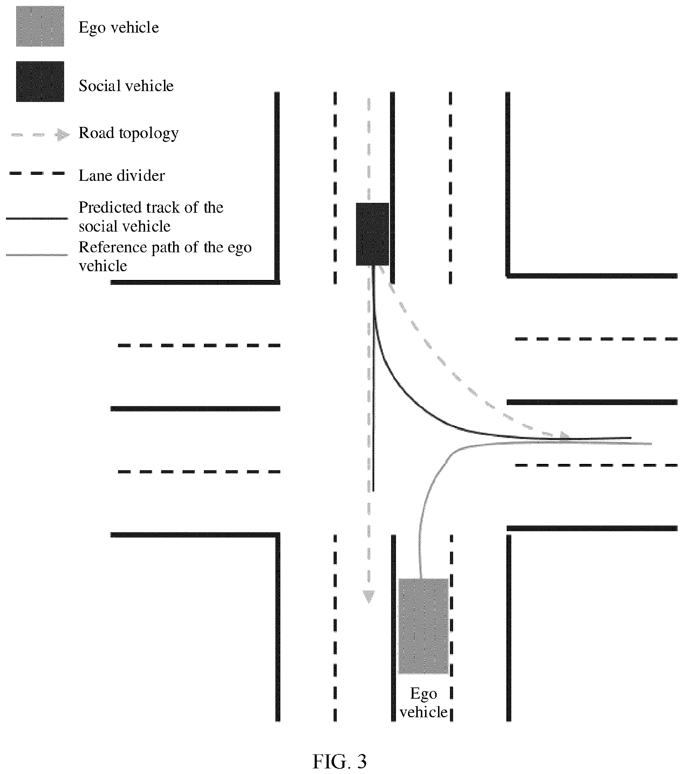

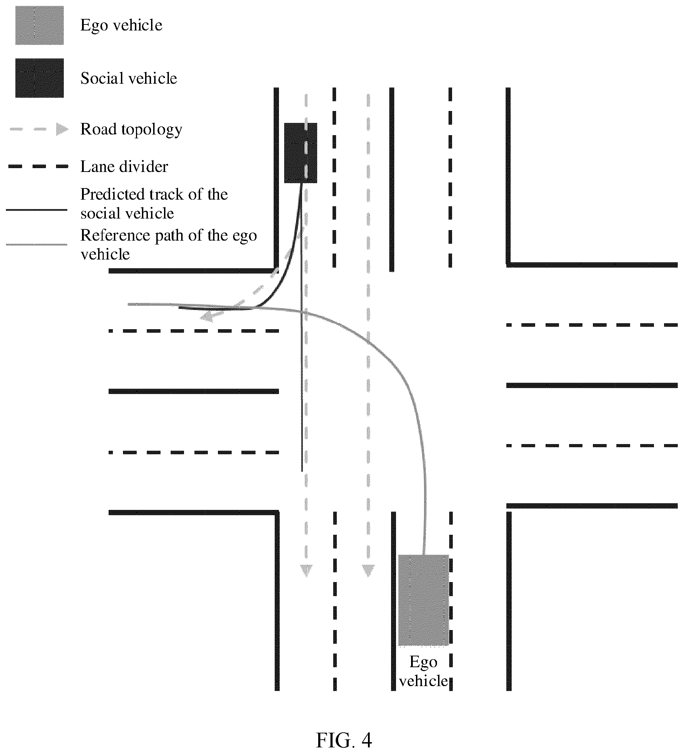

A scenario to which embodiments of this application are applied may be any scenario in which the ego vehicle interacts with a social vehicle (namely, another vehicle). In embodiments of this application, the social vehicle is a vehicle that has at least two road topologies, and is also referred to as a game object in this application. In an example, FIG. 2 shows a typical application scenario of this application. In this application scenario, an ego vehicle goes straight, and a game object turns left/goes straight. In another example, FIG. 3 shows another typical application scenario of this application. In this application scenario, an ego vehicle turns right, and a game object turns left/goes straight. In another example, FIG. 4 shows another typical application scenario of this application. In this application scenario, an ego vehicle turns left, and a game object turns right/goes straight. In these application scenarios, the ego vehicle needs to identify an intent-indeterminate dynamic object (for the ego vehicle, the intent-indeterminate dynamic obstacle is a dynamic object that has two or more possible traveling paths) based on inputs such as obstacle information, motion information, road topology information, environment information, and traffic rule information (such as a right of way), perform probability inference on each intent of such an object, and perform indeterminate decision-making based on the probability of each intent, to decide to get the grab on/yield to or avoid/follow the obstacle.

It should be understood that the foregoing is merely several specific scenarios to which embodiments of this application are applied. Application of embodiments of this application is not limited to the foregoing scenarios, and embodiments of this application may be applied to any scenario in which the ego vehicle interacts with the game object. Details are not described in this application.

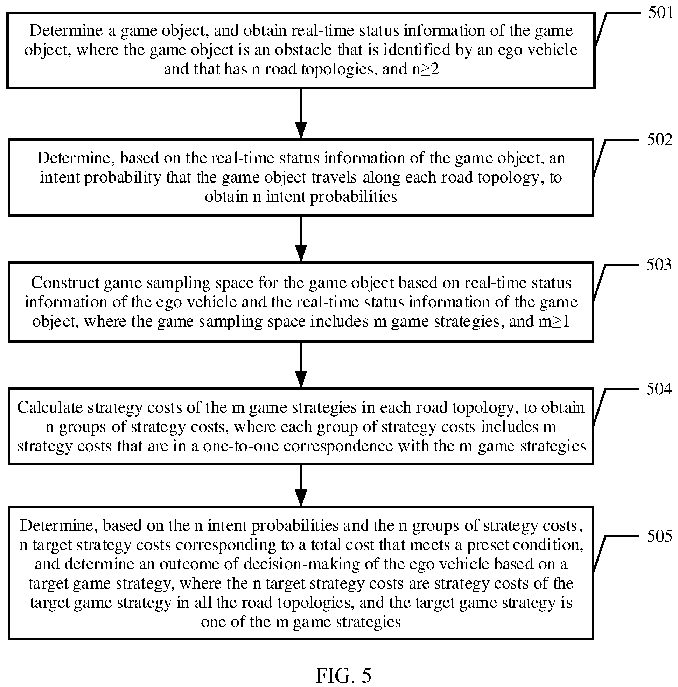

With reference to the foregoing descriptions, the following describes the intelligent driving decision-making method provided in embodiments of this application. Specifically, FIG. 5 is a schematic flowchart of an intelligent driving decision-making method according to an embodiment of this application. The method may include the following steps.

501: Determine a game object, and obtain real-time status information of the game object, where the game object is an obstacle that is identified by an ego vehicle and that has n road topologies, and $n \geq 2$.

First, the ego vehicle determines the game object based on collected perception data and topology information obtained from an upstream module, and obtains the real-time status information of the game object. It should be noted that the real-time status information of the game object is described by using the game object as a vehicle coordinate system, for example, one or more of real-time position information, a real-time orientation angle, a real-time speed, and a real-time acceleration of the game object. The real-time position information of the game object indicates a position of a center of mass of the game object, and may be denoted as $(x_0, y_0)$. The real-time orientation angle of the game object indicates an orientation angle of a vehicle front of the game object. In addition, the game object is an obstacle that has n ($n \geq 2$) road topologies.

It should be noted that, in some implementations of this application, a manner of determining the game object includes but is not limited to: The ego vehicle may first obtain all road topologies in a range of a preset area around the ego vehicle (for example, within a range of a radius of 10 m around the ego vehicle), then obtain obstacle information of the obstacle (for example, at least one obstacle) perceived around the ego vehicle, and calculate a road topology of each obstacle based on the obtained obstacle information and all the obtained road topologies. If an obstacle having n road topologies exists, the obstacle having the n road topologies is determined to be the game object. The process of determining the game object may also be referred to as a process of identifying a road topology of the object and identifying the intent-indeterminate object.

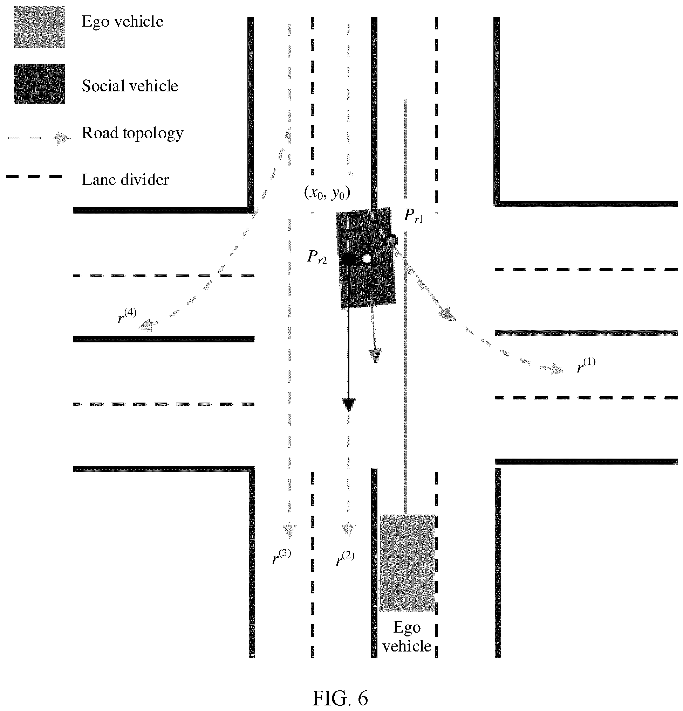

For ease of understanding the foregoing process, the following uses a specific instance to describe the process of determining the game object. Specifically, FIG. 6 shows a traffic scenario in which an ego vehicle goes straight and an intent-indeterminate obstacle may turn left/go straight. No other dynamic obstacles exist in an ambient environment of the intent-indeterminate obstacle.

As shown in FIG. 6, first, the ego vehicle may obtain, by using an upstream module (for example, a navigation module), information about all road topologies in a range of a preset area around the ego vehicle, for example, information about all road topologies within 20 m around an intersection where the ego vehicle is located, for example, opposite left-turn $r^{(1)}$, opposite straight-through $r^{(2)}$ and $r^{(3)}$, and opposite right-turn $r^{(4)}$ (indicated by a dotted line with an arrow). Through comparison with reference track information of the ego vehicle (indicated by a straight line in front of the ego vehicle), a multi-intent lane may be obtained through filtering. The multi-intent lane is a lane in which a social vehicle that may collide with the ego vehicle is located. In this application, a lane adjacent to a lane in which the ego vehicle is located and a lane whose traveling track may intersect with that of the ego vehicle are obtained through filtering. Specifically, a road topology approximately parallel to the reference track of the ego vehicle may be first identified (for some other special intersections, when an included angle between the road topology and the reference track of the ego vehicle is within a preset range, it may also be considered as a parallel relationship, for example, when the included angle ranges from 150° to 180°, it may also be considered as being parallel), to obtain $r^{(2)}$ and $r^{(3)}$, namely, a through lane topology. In addition, a left-turn lane $r^{(1)}$ may be obtained through filtering based on the road topology information. By comparing road points in each topology of $r^{(1)}$ and $r^{(2)}$, it can be learned that straight line parts of $r^{(1)}$ and $r^{(2)}$ before entering the intersection overlap each other. Therefore, $r^{(1)}$ and $r^{(2)}$ may be considered as multi-intent lanes.

Then, when the social vehicle is identified by a perception module of the ego vehicle for the first time, an autonomous driving system of the ego vehicle may obtain real-time status information such as a position and a size of the social vehicle. The position and the size of the social vehicle and road point information of the multi-intent lanes are input to a collision detection algorithm, to obtain a lane of the social vehicle. In other words, in this embodiment, the social vehicle is located in the multi-intent lanes $r^{(1)}$ and $r^{(2)}$. Therefore, it may be considered that the social vehicle is a fuzzy indeterminate obstacle, namely, a game object. A road topology of the social vehicle belongs to the multi-intent lanes $r^{(1)}$ and $r^{(2)}$. In the future, the social vehicle may turn left by taking $r^{(1)}$ as a reference path, or may go straight by taking $r^{(2)}$ as a reference path.

It should be noted that FIG. 6 shows a process of determining a game object. In an actual application process, whether each obstacle identified by the perception module of the ego vehicle is a game object may be determined according to the foregoing method. If the identified obstacle has n (n≥2) road topologies, it is determined that the obstacle is a game object. In FIG. 6, only one of the obstacles is used as an example for description. It should be further noted that, when n=1, the foregoing game object is an intent-determinate obstacle. In this case, the obstacle has only one road topology (that is, n=1), and a calculated intent probability that the obstacle travels along the unique road topology is determined, and is 100%. Subsequent processes such as working out a game solution and determining an outcome of decision-making of a downstream task based on the intent probability are similar, and details are not described herein again.

It should be noted that, in embodiments of this application, a process of determining a game object is not limited to the foregoing manner, and also includes but is not limited to: (1) a data-driven method, for example, a manner of determining an intent of a social vehicle based on an attention model is to output attention distribution of the social vehicle by inputting a speed, a position, a topology, and historical information of the social vehicle to the model, to determine the intent of the social vehicle based on the attention distribution; and (2) an expertise method, for example, querying to obtain an intent by using data of relationships between the intent and stored data such as a speed, a position, and a topology. Specifically, an implementation of the process of determining the game object is not limited in this application.

502: Determine, based on the real-time status information of the game object, an intent probability that the game object travels along each road topology, to obtain n intent probabilities.

Then, the ego vehicle may determine, based on the real-time status information of the game object, the intent probability that the game object travels along each road topology, to obtain the n intent probabilities.

Specifically, first, the ego vehicle obtains feature reference information of the game object in each owned road topology (the left-turn topology $r^{(1)}$ and the straight-through topology $r^{(2)}$ shown in FIG. 6). The feature reference information is used to describe a datum status of an intent of the game object to travel along each road topology in a current traffic environment status. Then, the ego vehicle determines, based on the real-time status information of the game object and the feature reference information, the intent probability that the game object travels along each road topology. Similarly, the feature reference information of the game object in each owned road topology is also described by using the game object as a vehicle coordinate system, for example, one or more of reference position information, a reference orientation angle, a reference speed, and a reference acceleration of the game object. The reference position information of the game object indicates a position of a target road point (namely, a reference point, for example, a road point closest to a position of a center of mass of the game object in the left-turn topology of the game object) selected for the game object in each owned road topology. The reference orientation angle is a tangent angle of a reference point in a corresponding road topology (the reference orientation angle is described for the game object by using the game object as a coordinate). Therefore, after the target road point of the game object in each road topology is selected, remaining feature reference information, for example, the reference orientation angle, may be obtained based on the target road point. It should be noted that, in some other implementations of this application, the feature reference information of the game object in each road topology may be directly obtained through calculation based on a road congestion degree and/or a radical degree of a traveling style of the game object. Alternatively, initial feature reference information may be first obtained based on a target road point in each road topology, and then further optimization and adjustment are performed based on a road congestion degree and/or a radical degree of a traveling style of the game object, so that optimized feature reference information more properly represents a feature of each intent in the current traffic environment status, to better accommodate to an actual situation.

For ease of understanding, the following still uses the application scenario shown in FIG. 6 as an example to describe an implementation of determining the feature reference information of the game object in each owned road topology. In the application scenario shown in FIG. 6, it can be learned that road topologies owned by the game object are respectively $r^{(1)}$ (corresponding to a left-turn intent) and $r^{(2)}$ (corresponding to a straight-through intent). In this application scenario, it is assumed that the feature reference information includes three pieces: the reference position information, the reference orientation angle, and the reference speed. The feature reference information of the left-turn topology $r^{(1)}$ is a reference position $Pos_{r(1)}$ (abbreviated as $P_{r1}$ in FIG. 6), a reference orientation angle $\theta_{r(1)}$, and a reference speed $V_{r(1)}$. The feature reference information of the straight-through topology $r^{(2)}$ is a reference position $Pos_{r(2)}$ (abbreviated as $P_{r2}$ in FIG. 6), a reference orientation angle $\theta_{r(2)}$, and a reference speed $V_{r(2)}$. Details are shown in Table 1:

**Table 1: Feature reference information under the left-turn intent and the straight-through intent**

|  | Left-turn intent | Straight-through intent |
| --- | --- | --- |
| Reference position information | $Pos_{r(1)}$ | $Pos_{r(2)}$ |
| Reference orientation angle | $\theta_{r(1)}$ | $\theta_{r(2)}$ |
| Reference speed | $V_{r(1)}$ | $V_{r(2)}$ |

In an example, a process of calculating the feature reference information is as follows: As shown in FIG. 6, the position of the center of mass of the game object is $(x_0, y_0)$. All road points in $r^{(1)}$ are traversed. A closest road point (not necessarily the closest road point, and may be any road point, which is merely an example herein) $Pos_{r(1)}$ may be found in the left-turn topology $r^{(1)}$, and is used as the reference position $Pos_{r(1)}$ (namely, $P_{r1}$) in $r^{(1)}$. An orientation angle at $Pos_{r(1)}$ along $r^{(1)}$ is used as the reference orientation angle $\theta_{r(1)}$ in $r^{(1)}$. Similarly, a reference position $Pos_{r(2)}$ (namely, $P_{r2}$) and a reference orientation angle $\theta_{r(2)}$ in the straight-through topology $r^{(2)}$ may be separately obtained.

The reference speed may be determined based on different cases of whether another obstacle exists around the game object, which are separately described below.

1. No obstacle other than the ego vehicle exists around the game object.

In this case, a value of the reference speed of the game object is obtained through calculation based on a kinematic constraint on the game object and/or an environmental traffic constraint on the game object. In an example, the kinematic constraint on the game object includes but is not limited to the following factors:

(1) Lane topology curvature speed limit

The lane topology curvature speed limit $Vr_a^{(i)} = \sqrt{\left\{\dfrac{a_{lmax}}{K}\right\}}$. K is the curvature of the road topology $r^{(i)}$.

(2) Start acceleration constraint

The start acceleration constraint $Vr_b^{(i)} = a_{smax} \cdot t$, t = 5s. Herein, $a_{smax}$ is a maximum start acceleration of the social vehicle. It should be noted that different vehicle models such as a truck, a car, a bus, and a motorcycle need to be configured with different values.

(3) Red-light deceleration constraint

The red-light deceleration constraint $Vr_c^{(i)} = v - \dfrac{v^2}{2d} \cdot t$. Herein, d is a distance from a current position to a stop line of an intersection, v is a current speed of the social vehicle, and t is accumulated duration from time when the red light is detected, and increases frame by frame.

In addition, in embodiments of this application, the environmental traffic constraint on the game object includes but is not limited to the following several factors:

(1) Road speed limit of a lane in which the game object is located

The road speed limit of the game object $\mathrm{Vr}_{\mathrm{d}}^{(i)}$ may be obtained from a road topology delivered by an upstream.

(2) Speed constraint on a preceding vehicle in the lane in which the game object is located

The speed constraint on a preceding vehicle in the lane in which the game object is located is $\mathrm{Vr}_{\mathrm{e}}^{(i)}$. In the instance corresponding to FIG. 6, the social vehicle has no preceding vehicle. Therefore, $\mathrm{Vr}_{\mathrm{e}}^{(i)} = \infty$.

(3) Speed constraint on an obstacle in a lane other than the lane in which the game object is located

A dynamic object in another lane is $\mathrm{Vr}_{\mathrm{f}}^{(i)}$. In embodiments, no other vehicles exist around the social vehicle. Therefore, $\mathrm{Vr}_{\mathrm{f}}^{(i)} = \infty$.

It should be noted that, in addition to the foregoing manner, the speed constraint on a preceding vehicle in a lane in which the game object is located is not limited to being obtained through data driving/expertise, and details are not described herein.

According to the foregoing method, the ego vehicle may calculate each sub-speed constraint, and determine, based on each sub-speed constraint, a speed value that meets a preset requirement as the reference speed. For example, minimum values of all the sub-speed constraints may be used as reference speeds $V_{r(1)}$ and $V_{r(2)}$ of $r^{(1)}$ and $r^{(2)}$. Details are shown in Formula (1) and Formula (2):

$$V_{r^{(1)}} = \min(\mathrm{Vr}_{\mathrm{a}}^{(1)}, \mathrm{Vr}_{\mathrm{b}}^{(1)}, \mathrm{Vr}_{\mathrm{c}}^{(1)}, \mathrm{Vr}_{\mathrm{d}}^{(1)}, \mathrm{Vr}_{\mathrm{e}}^{(1)}, \mathrm{Vr}_{f}^{(1)}) \ \ (1)$$

$$V_{r^{(2)}} = \min(\mathrm{Vr}_{\mathrm{a}}^{(2)}, \mathrm{Vr}_{\mathrm{b}}^{(2)}, \mathrm{Vr}_{\mathrm{c}}^{(2)}, \mathrm{Vr}_{\mathrm{d}}^{(2)}, \mathrm{Vr}_{\mathrm{e}}^{(2)}, \mathrm{Vr}_{f}^{(2)}) \ \ (2)$$

2. An obstacle other than the ego vehicle exists around the game object.

In this case, the ego vehicle further needs to determine a traveling status of the another obstacle, and determine a value range of the reference speed based on the traveling status.

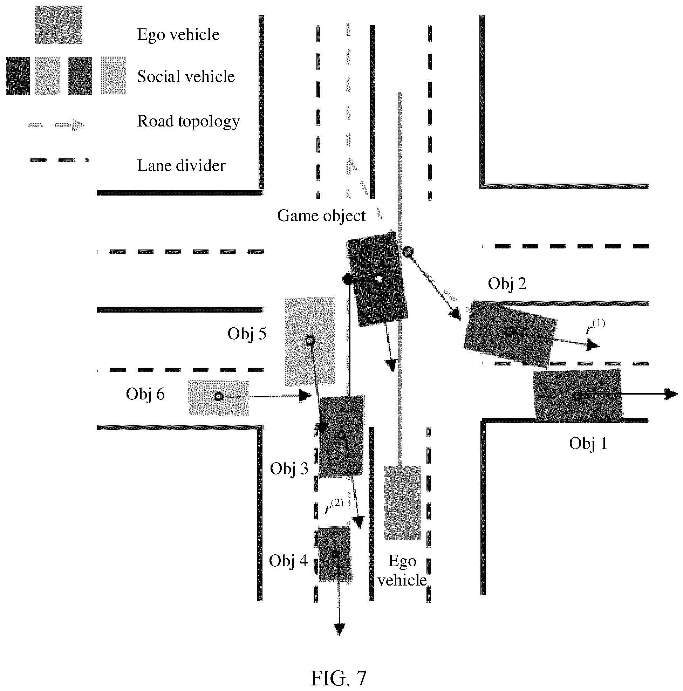

For ease of description, the following uses a specific instance for description. Specifically, FIG. 7 shows a case in which obstacles Obj 1 to Obj 6 other than the ego vehicle exist around the game object. The ego vehicle goes straight at an unprotected straight-through intersection. An opposite game object has road topologies of both a through lane and a left-turn lane. The dynamic obstacles Obj 1 and Obj 2 exist on a left-turn topology path of the opposite game object. The dynamic obstacles Obj 3 and Obj 4 exist on a straight-through topology path of the opposite game object. The straight-through dynamic obstacle Obj 5 and the crossing dynamic obstacle Obj 6 exist in other lanes. Based on FIG. 7, more other dynamic traffic participants exist in an environment around the opposite game object of the ego vehicle. This affects generation of a reference speed of the game object in each intent case.

On the basis of this, in embodiments of this application, ambient traffic participants may be classified into two types based on a relative position relationship between the ambient dynamic traffic participant and the game object: dynamic obstacles (for example, Obj 1 to Obj 4 in FIG. 7) on a same road topology path and dynamic obstacles (for example, Obj 5 and Obj 6 in FIG. 7) on different road topology paths. The following separately describes different cases by using FIG. 7 as an example.

A. Another obstacle exists, and the obstacle is in a road topology of the game object.

When at least one obstacle located in front of the game object (which may be referred to as a first target obstacle, and one or more first target obstacles may exist) exists in the n road topologies owned by the game object, it is necessary to first determine whether a distance between the first target obstacle and the game object is a safe distance. If the distance is a safe distance, the reference speed of the game object is obtained based on a speed of the one or more first target obstacles.

For ease of understanding, the following uses FIG. 7 as an example to describe the reference speed of the game object in this case. For each dynamic obstacle on the road topology path owned by the game object, the game object should be able to brake and stop at a proper deceleration, to maintain a safe distance from the preceding vehicle, thereby avoiding rear-end collision. Therefore, in embodiments of this application, a reference speed with safety of each preceding dynamic object considered may be obtained by traversing all preceding dynamic objects on a same road topology path, and then a minimum value of the reference speed of each preceding dynamic object is used as a speed constraint $Vr_e^{(i)}$ on the preceding vehicle on the road topology path $r^{(i)}$. In an example, a manner of calculating the safe distance may be shown in Formula (3):

$$d_{risk} = \max\left(\frac{v^2}{2a_{smax}}, k\right) (3)$$

Herein, $a_{smax}$ is a proper deceleration and may be preset, for example, may be $[-3, -1.5]$ m/s$^2$. Herein, v is a current real-time speed of the game object, and k is a preset value and may be defined, for example, k=15. It should be noted that the real-time speed of the game object herein is not a speed of the game object observed by the ego vehicle at the beginning, but an actual speed value of the game object obtained when the vehicle travels at each current moment.

In embodiments of this application, for the left-turn road topology $r^{(1)}$, distances from Obj 1 and Obj 2 to the game object are both less than $d_{risk}$, and therefore need to be considered. The speed constraint on the preceding vehicle may be shown in Formula (4):

$$V_{r_e^{(1)}} = \min(V_{toObj1}, V_{toObj2}) (4)$$

$V_{toObj1}$ and $V_{toObj2}$ are current real-time speeds of the preceding vehicles Obj 1 and Obj 2, respectively. It should also be noted that the real-time speeds of the preceding vehicles Obj 1 and Obj 2 herein are not speeds of the preceding vehicles Obj 1 and Obj 2 observed by the ego vehicle at the beginning, but actual speed values of the vehicles obtained when the preceding vehicles Obj 1 and Obj 2 travel at each current moment.

Similarly, for the straight-through road topology $r^{(2)}$, distances from Obj 3 and Obj 4 to the game object are both less than $d_{risk}$, and therefore need to be considered. The speed constraint on the preceding vehicle may be shown in Formula (5):

$$V_{r_e^{(2)}} = \min(V_{toObj3}, V_{toObj4}) (5)$$

$V_{toObj3}$ and $V_{toObj4}$ are current real-time speeds of the preceding vehicles Obj 3 and Obj 4, respectively. It should also be noted that the real-time speeds of the preceding vehicles Obj 3 and Obj 4 herein are not speeds of the preceding vehicles Obj 3 and Obj 4 observed by the ego vehicle at the beginning, but actual speed values of the vehicles obtained when the preceding vehicles Obj 3 and Obj 4 travel at each current moment.

It should be noted that, in embodiments of this application, calculation of the reference speed of the game object may not be limited to the foregoing implementation according to the safe distance method. Alternatively, the reference speed may be calculated according to a safe time-distance method, an expertise system, and a data-driven method. This is not specifically limited in this application.

B. Another obstacle exists, and the obstacle is not in a road topology of the game object.

For a dynamic object that is not in a road topology of the game object (which may be referred to as a dynamic object in another road topology), the reference speed cannot be calculated by using the foregoing safe inter-vehicle distance method. Therefore, in this application, manners of calculating the reference speed are further described by classifying dynamic objects in another road topology, including but not limited to the following manners:

a. The another obstacle and the game object travel in parallel in a same direction.

The game object has the n road topologies. When at least one obstacle (which may be referred to as a second target obstacle, and one or more second target obstacles may exist) exists in a traveling direction that is the same as that of the game object, and a road topology owned by the at least one second target obstacle does not belong to the n road topologies, the ego vehicle may first obtain a datum speed of each second target obstacle according to a preset method, and then obtain the reference speed of the game object based on each datum speed.

For ease of understanding, the following still uses FIG. 7 as an example to describe the reference speed of the game object in this case. It can be learned from FIG. 7 that Obj 5 belongs to this case. To be specific, a road topology owned by Obj 5 does not belong to the road topologies $r^{(1)}$ and $r^{(2)}$, and Obj 5 and the game object travel in parallel in a same direction. For Obj 5, in this application, a datum speed $V_{toObj5}$ of Obj 5 may be first calculated by using a virtual wall penetrating method (a method in another related patent of the present applicant, which is not described herein). If other obstacles other than Obj 5 exist within a safe distance and travel in parallel with and in a same direction as that of the game object, a datum speed $V_{toObjx}$ corresponding to each obstacle that travels in parallel with and in the same direction as that of the game object is calculated, and finally a minimum value of Obj 5 and all of the $V_{toObjx}$ is used as a final reference speed $V_{r_{f,parall}^{(2)}}$ of the game object in this case, as shown in Formula (6):

$$V_{r_{f,parall}^{(2)}} = \min(V_{toObj5}, V_{toObjx}) \ (6)$$

Herein, x is a sequence number of each obstacle that travels in parallel with and in a same direction as that of the game object. In the instance corresponding to FIG. 7, only Obj 5 satisfies this case, and the obtained final reference speed $V_{r_{f,parall}^{(2)}}$ is $V_{toObj5}$.

b. The another obstacle is a crossing obstacle of the game object.

The game object has the n road topologies. When at least one obstacle (which may be referred to as a third target obstacle, and one or more third target obstacles may exist) exists in a crossing traveling direction of the game object, the ego vehicle may first determine whether a difference between moments at which the game object and the at least one third target obstacle reach a predicted collision point is greater than a preset threshold, and calculate the reference speed based on an outcome of determining. Details are described below.

(1) The difference between the moments at which the game object and the at least one third target obstacle reach the predicted collision point is greater than the preset threshold.

Based on this outcome of determining, the reference speed of the game object may be the real-time speed of the game object. It should be noted that the real-time speed of the game object herein is not a speed of the game object observed by the ego vehicle at the beginning, but an actual speed value of the game object obtained when the vehicle travels at each current moment.

Similarly, for ease of understanding, the following still uses FIG. 7 as an example to describe the reference speed of the game object in this case. It can be learned from FIG. 7 that Obj 6 belongs to this case. To be specific, Obj 6 is a crossing vehicle of the game object. The ego vehicle may first calculate an intersection point of a predicted track of Obj 6 and a predicted track of the game object and distances $s_{obj6}$ and s from Obj 6 and the game object to the intersection point, and calculate, based on observed current speeds and accelerations of Obj 6 and the game object, a moment $ttc_{obj6}$ at which Obj 6 reaches the intersection point and a moment ttc at which the game object reaches the intersection point, to obtain the difference tdtc between the moments at which Obj 6 and the game object reach the collision point. Calculation of the difference tdtc between the moments is shown in Formula (7):

$$tdtc = ttc_{obj6} - ttc \ (7)$$

If tdtc > tdtd$_{thresh}$ (tdtd$_{thresh}$ is the preset threshold), it indicates that the game object reaches the collision point tdtd$_{thresh}$ earlier than Obj 6. This case is safe. Therefore, the reference speed of the game object may remain unchanged, that is:

$$V_{r_{f,cross,obj6}^{(2)}} = v \ (8)$$

$V_{r_{f,cross,obj6}^{(2)}}$ is the reference speed of the game object, and v is the current real-time speed of the game object. It should be noted that the real-time speed of the game object herein is not a speed of the game object observed by the ego vehicle at the beginning, but an actual speed value of the game object obtained when the vehicle travels at each current moment.

(2) The difference between the moments at which the game object and the at least one third target obstacle reach the predicted collision point is less than or equal to the preset threshold.

Based on this outcome of determining, the reference speed of the game object is obtained based on the real-time speed of the game object, and the reference speed needs to be lower than the real-time speed of the game object. Similarly, the real-time speed of the game object herein is not a speed of the game object observed by the ego vehicle at the beginning, but an actual speed value of the game object obtained when the vehicle travels at each current moment.

Similarly, for ease of understanding, the following still uses FIG. 7 as an example to describe the reference speed of the game object in this case. The difference tdtc between the moments at which Obj 6 and the game object reach the collision point may be obtained according to the foregoing Formula (7). If tdtc < tdtd$_{thresh}$, it indicates that the moments at which Obj 6 and the game object reach the collision point is approximate. This case is dangerous. Therefore, the game object should decelerate for yield. In this case, the reference speed $V_{r_{f,cross,obj6}^{(2)}}$ of the game object may be calculated according to Formula (9):

$$V_{r_{f,cross,obj6}^{(2)}} = v - \frac{v^2}{2(s-d_{safe})} * t \quad (9)$$

Herein, t is time accumulated from a first entry of Obj 6 to the safe distance. A decision-making module performs accumulation update when running each frame, and d$_{safe}$ is a safety threshold. To be specific, the vehicle stops at d$_{safe}$ in front of the collision point. It should be noted that, for a crossing vehicle other than Obj 6, a calculation manner is similar, and details are not described herein again. Finally, a minimum value of the reference speed of Obj 6 and a reference speed $V_{r_{f,cross,objy}^{(2)}}$ of each of other crossing vehicles is used as a final reference speed $V_{r_{f,cross}^{(2)}}$ of the game object in this case, as shown in Formula (10):

$$V_{r_{f,cross}^{(2)}} = min\left(V_{r_{f,cross,obj6}^{(2)}}, V_{r_{f,cross,objy}^{(2)}}\right) \quad (10)$$

Herein, y is a sequence number of each obstacle that crosses the game object. In the instance corresponding to FIG. 7, only Obj 6 satisfies this case, and the obtained final reference speed $V_{r_{f,cross}^{(2)}}$ is $V_{r_{f,cross,obj6}^{(2)}}$.

Finally, a speed constraint on the ambient dynamic object in the straight-through road topology r$^{(2)}$ is a minimum value $V_{r_f^{(2)}}$ of speed constraints on the preceding vehicle and the dynamic objects in other lanes.

$$V_{r_f^{(2)}} = min\left(V_{r_{f,parall}^{(2)}}, V_{r_{f,cross}^{(2)}}\right) \quad (11)$$

Similarly, the speed constraint on the dynamic object in the left-turn road topology r$^{(1)}$ is as follows:

$$V_{r_f^{(1)}} = min\left(V_{r_{f,parall}^{(1)}}, V_{r_{f,cross}^{(1)}}\right) \quad (12)$$

It should be noted that the foregoing several manners of calculating the reference speed of the game object are merely examples. The reference speed of the game object is not limited to the foregoing method, and the reference speed of the game object may alternatively be calculated according to a data-driven method, an expertise method, or the like. This is not specifically limited in this application.

Based on the foregoing descriptions, after the feature reference information of the game object is obtained, the intent probability that the game object travels along each road topology may be determined based on the real-time status information of the game object and the obtained feature reference information. In some implementations of this application, an implementation of determining, based on the real-time status information of the game object and the feature reference information, the intent probability that the game object travels along each road topology may be as follows: First, a target eigenvector is obtained based on the real-time status information of the game object and the feature reference information obtained through calculation in the foregoing manner. In an example, it is assumed that the feature reference information includes reference position information, a reference orientation angle, and a reference speed, and a manner of calculating the target eigenvector may be shown in Formula (13):

$$f_{k,pos} = Pos_{r^{(i)}} - Pos_c$$

$$f_{k,\theta} = \theta_{r^{(i)}} - \theta_c \quad (13)$$

$$f_{k,v} = V_{r^{(i)}} - V_c$$

Herein, $f_{k,pos}$, $f_{k,\theta}$, and $f_{k,v}$ are target eigenvectors, and may be denoted as $(f_{k,pos}, f_{k,\theta}, f_{k,v})$; $Pos_{r_{(i)}}$, $\theta_{r_{(i)}}$, and $V_{r_{(i)}}$ are the reference position, the reference orientation angle, and the reference speed of the game object in the road topology $r^{(i)}$, respectively; and $Pos_c$, $\theta_c$, and $V_c$ are a current observation position (namely, real-time position information), an observed real-time orientation angle, and an observed real-time speed of the game object, respectively.

Then, a likelihood probability of the target eigenvector is determined based on a probability density distribution dataset constructed in advance. The probability density distribution dataset includes probability density distribution of eigenvectors with different eigenvector values. In an example, it is assumed that the feature reference information includes the reference position information, the reference orientation angle, and the reference speed, and likelihood probabilities that are of the target eigenvectors $(f_{k,pos}, f_{k,\theta}, f_{k,v})$ and that are obtained according to the foregoing Formula (13) may be denoted as $P(f_{k,pos} \mid r^{(i)})$, $P(f_{k,\theta} \mid r^{(i)})$, and $P(f_{k,v} \mid r^{(i)})$.

It should be noted that, in embodiments of this application, the likelihood probability $P(f_{k,pos} \mid r^{(i)})$ of the position may be qualitatively described as follows: A longer distance from the current position (namely, the position of the center of mass) of the game object to the reference position in the road topology $r^{(i)}$ (that is, an increase in $f_{k,pos}$) indicates a lower probability that the game object travels along the road topology $r^{(i)}$ in the future. In other words, $P(f_{k,pos} \mid r^{(i)})$ should decrease with the increase in $f_{k,pos}$. Similarly, the likelihood probability $P(f_{k,\theta} \mid r^{(i)})$ of the orientation angle may be qualitatively described as follows: A larger difference $(f_{k,\theta})$ between the current real-time orientation angle $\theta_c$ of the game object and the reference orientation angle $\theta_{r_{(i)}}$ in the road topology $r^{(i)}$ indicates a lower probability that the game object travels along the road topology $r^{(i)}$ in the future. In other words, $P(f_{k,\theta} \mid r^{(i)})$ decreases with an increase in $f_{k,\theta}$. Still similarly, the likelihood probability $P(f_{k,v} \mid r^{(i)})$ of the speed may be qualitatively described as follows: A larger difference between the current real-time speed $V_c$ of the game object and the reference speed $V_{r_{(i)}}$ of the road topology $r^{(i)}$ indicates a lower probability that the game object travels along the road topology $r^{(i)}$ in the future. In other words, $P(f_{k,v} \mid r^{(i)})$ decreases with an increase in $f_{k,v}$.

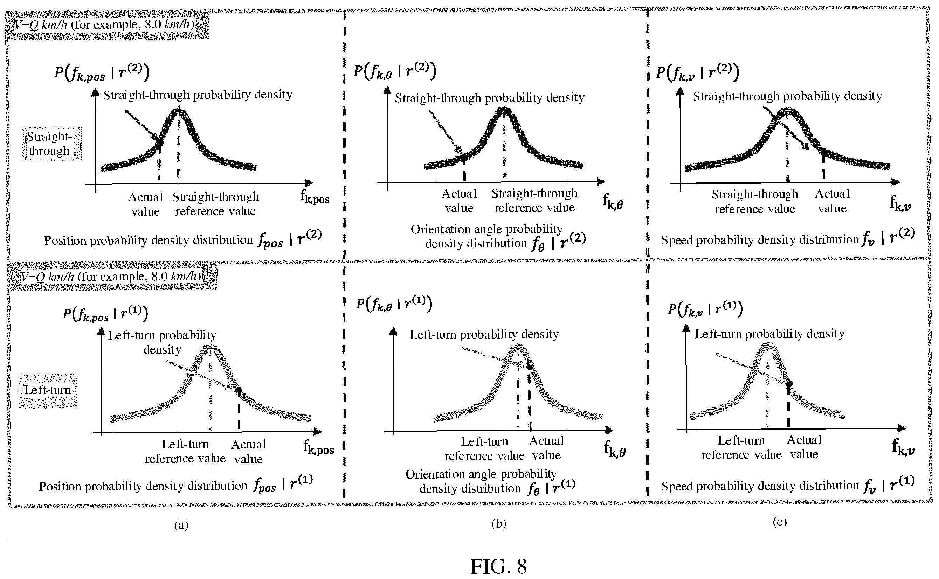

In an example, a relationship between the likelihood probabilities $P(f_{k,pos} \mid r^{(i)})$, $P(f_{k,\theta} \mid r^{(i)})$, and $P(f_{k,v} \mid r^{(i)})$ and the target eigenvectors $(f_{k,pos}, f_{k,\theta}, f_{k,v})$ may be shown in FIG. 8. FIG. 8 is a distribution diagram of eigenvector-likelihood probability relationship distribution in straight-through and left-turn scenarios of the game object obtained when a speed V is Q km/s (for example, 8 km/s). In (a) in FIG. 8, a horizontal coordinate is $f_{k,pos}$, and a vertical coordinate is $P(f_{k,pos} \mid r^{(i)})$. Similarly, in (b) in FIG. 8, a horizontal coordinate is $f_{k,\theta}$, and a vertical coordinate is $P(f_{k,\theta} \mid r^{(i)})$. In (c) in FIG. 8, a horizontal coordinate is $f_{k,v}$, and a vertical coordinate is $P(f_{k,v} \mid r^{(i)})$.

In the foregoing embodiment of this application, the target eigenvector-likelihood probability relationship is designed by using normal distribution (if an environmental factor, a radical degree, and the like of the game object are further considered, the target eigenvector-likelihood probability relationship may be in a form of approximate normal distribution). It should be noted that in some other implementations of this application, a design of the relationship is not limited to being obtained according to methods such as generation by an expert database and based on data-driven statistics. This is not limited in this application.

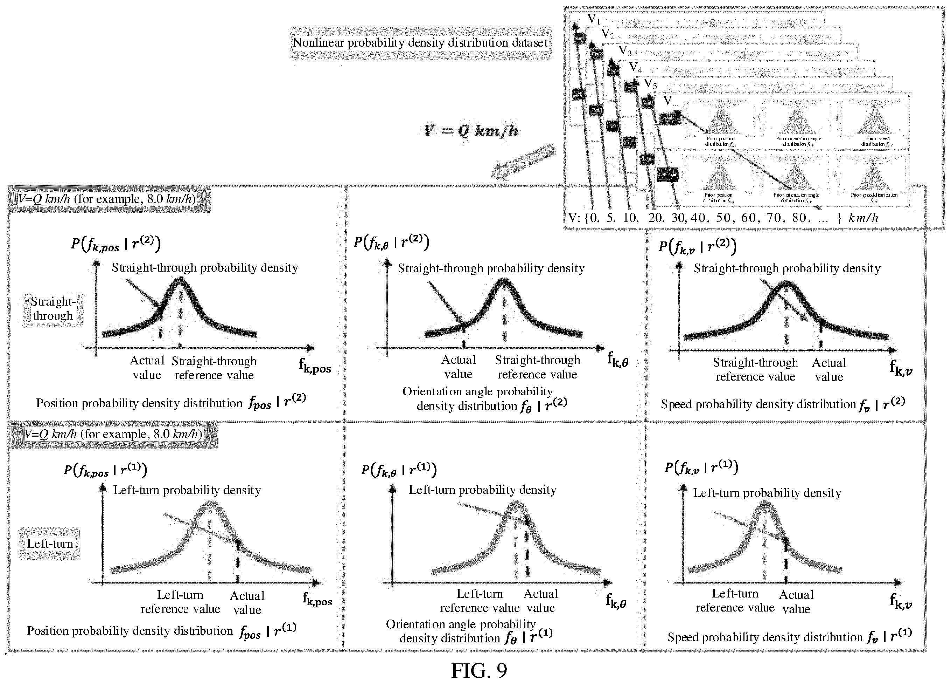

It should be noted that, it can be learned from FIG. 8 that a closer observed value to a reference status indicates a higher likelihood probability. In addition, in view that the game object is at different speeds, there may be different distribution forms of eigenvector and likelihood probability distribution. In view of this, in this application, a nonlinear probability density distribution dataset based on different speeds may be further designed. The nonlinear probability density distribution dataset includes probability density distribution of eigenvectors with different speed values and different eigenvector values. Specifically, with reference to FIG. 9, for different speed values, there are probability density distribution datasets corresponding to the speeds. FIG. 8 is a probability density distribution dataset obtained when a value of V is Q km/s (for example, 8 km/s). The following still uses the instance in FIG. 7 (the feature reference information includes the reference position information, the reference orientation angle, and the reference speed) as an example to describe separate cases of the nonlinear probability density distribution dataset.

(1) Position probability density distribution of a straight-through intent with different speed values

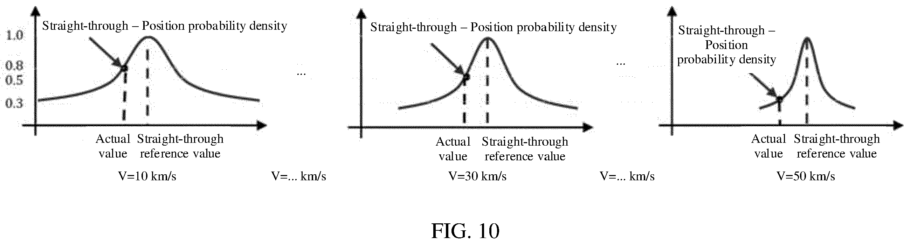

When the speed V is low (for example, V=10 km/s), a large change (compared with that in a case in which the speed is high) of the position of the game object is required to represent a change of an intent of the game object. Therefore, the distribution may be flatter, as shown in a subgraph on the left of FIG. 10. On the contrary, when the speed V of the game object is high (for example, V=50 km/s), there is an obvious intent change tendency upon a slight horizontal position offset. Therefore, the probability density distribution in this case may be more centralized, as shown in a subgraph on the right of FIG. 10.

However, it should be noted that, in embodiments of this application, the observed real-time speed of the game object may be any value, while the nonlinear probability density distribution dataset constructed in advance is a probability density distribution dataset for limited and different speed values, for example, 11 different values of V, namely, V of {5, 10, 20, 30, 40, 50, 60, 70, 80, 90, 100} km/s. If the observed current real-time speed of the game object is one of the 11 different values of V (for example, the observed current real-time speed is 50 km/s), based on a position probability density distribution dataset (as shown in a rightmost subgraph in FIG. 10) of the straight-through intent obtained when V=50 km/s, $P(f_{k,pos} \mid r^{(2)})$ corresponding to an actual value of the current target eigenvector $f_{k,pos}$ is used as a likelihood probability of $f_{k,pos}$. If the observed current real-time speed of the game object is not any one of the 11 different values of V (for example, the observed current real-time speed is 45 km/s), a likelihood probability is obtained through calculation based on a position probability density distribution dataset of the straight-through intent at two Vs (namely, V=40 km/s and V=50 km/s) adjacent to the observed current real-time speed. In an example, an interpolation of $P(f_{k,pos} \mid r^{(2)})$ corresponding to an actual value of the current target eigenvector $f_{k,pos}$ at two adjacent Vs may be used as a likelihood probability of $f_{k,pos}$. For example, it is assumed that when V=40 km/s, $P(f_{k,pos} \mid r^{(2)})$=0.7, and when V=50 km/s, $P(f_{k,pos} \mid r^{(2)})$ =0.9. When the speed of the game object is 45 km/s, a corresponding value of $P(f_{k,pos} \mid r^{(2)})$ is a median value between 0.7 and 0.9, namely, 0.8. In another example, a manner of calculating $P(f_{k,pos} \mid r^{(2)})$ may alternatively be nonlinear. Details are not described herein.

(2) Orientation angle probability density distribution of a straight-through intent with different speed values

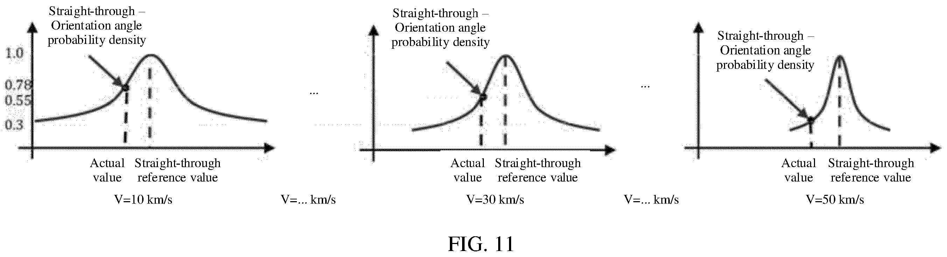

When the speed V is low (for example, V=10 km/s), a large change (compared with that in a case in which the speed is high) of the orientation angle of the game object is required to represent a change of an intent of the game object. Therefore, the distribution may be flatter, as shown in a subgraph on the left of FIG. 11. On the contrary, when the speed V of the game object is high (for example, V=50 km/s), there is an obvious intent change tendency upon a slight turn of a steering wheel. Therefore, the probability density distribution in this case may be more centralized, as shown in a subgraph on the right of FIG. 11.

Similarly, in embodiments of this application, the observed real-time speed of the game object may be any value, while the nonlinear probability density distribution dataset constructed in advance is a probability density distribution dataset for limited and different speed values, for example, 11 different values of V, namely, V of {5, 10, 20, 30, 40, 50, 60, 70, 80, 90, 100} km/s. If the observed current real-time speed of the game object is one of the 11 different values of V (for example, the observed current real-time speed is 50 km/s), based on an orientation angle probability density distribution dataset (as shown in a rightmost subgraph in FIG. 11) of the straight-through intent obtained when V=50 km/s, $P(f_{k,\theta} \mid r^{(2)})$ corresponding to an actual value of the current target eigenvector $f_{k,\theta}$ is used as a likelihood probability of $f_{k,\theta}$. If the observed current real-time speed of the game object is not any one of the 11 different values of V (for example, the observed current real-time speed is 45 km/s), a likelihood probability is obtained through calculation based on an orientation angle probability density distribution dataset of the straight-through intent at two Vs (namely, V=40 km/s and V=50 km/s) adjacent to the observed current real-time speed. In an example, an interpolation of $P(f_{k,\theta} \mid r^{(2)})$ corresponding to an actual value of the current target eigenvector $f_{k,\theta}$ at two adjacent Vs may be used as a likelihood probability of $f_{k,\theta}$. For example, it is assumed that when V=40 km/s, $P(f_{k,\theta} \mid r^{(2)})$=0.7, and when V=50 km/s, $P(f_{k,\theta} \mid r^{(2)})$=0.8. When the speed of the game object is 45 km/s, a corresponding value of $P(f_{k,\theta} \mid r^{(2)})$ is a median value between 0.7 and 0.8, namely, 0.75.

(3) Speed probability density distribution of a straight-through intent with different speed values

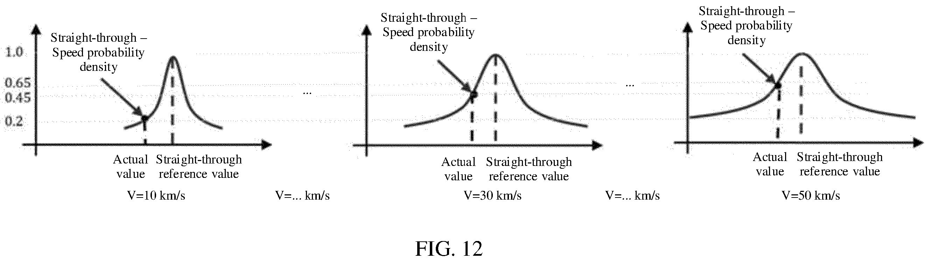

When the speed V is low (for example, V=10 km/s), a small change (compared with that in a case in which the speed is high) of the speed of the game object may represent a change of an intent of the game object. Therefore, the distribution should be more centralized, as shown in the subgraph on the left of FIG. 12. On the contrary, when the speed V of the game object is high (for example, V=50 km/s), a large change of the speed is required to represent a change of an intent. Therefore, the probability density distribution in this case should be flatter, as shown in a subgraph on the right of FIG. 12.

Similarly, in embodiments of this application, the observed real-time speed of the game object may be any value, while the nonlinear probability density distribution dataset constructed in advance is a probability density distribution dataset for limited and different speed values, for example, 11 different values of V, namely, V of {5, 10, 20, 30, 40, 50, 60, 70, 80, 90, 100} km/s. If the observed current real-time speed of the game object is one of the 11 different values of V (for example, the observed current real-time speed is 50 km/s), based on a speed probability density distribution dataset (as shown in a rightmost subgraph in FIG. 12) of the straight-through intent obtained when V=50 km/s, $P(f_{k,v} \mid r^{(2)})$ corresponding to an actual value of the current target eigenvector $f_{k,v}$ is used as a likelihood probability of $f_{k,v}$. If the observed current real-time speed of the game object is not any one of the 11 different values of V (for example, the observed current real-time speed is 45 km/s), a likelihood probability is obtained through calculation based on an orientation angle probability density distribution dataset of the straight-through intent at two Vs (namely, V=40 km/s and V=50 km/s) adjacent to the observed current real-time speed. In an example, an interpolation of $P(f_{k,v} \mid r^{(2)})$ corresponding to an actual value of the current target eigenvector $f_{k,v}$ at two adjacent Vs may be used as a likelihood probability of $f_{k,\theta}$. For example, it is assumed that when V=40 km/s, $P(f_{k,v} \mid r^{(2)})$=0.8, and when V=50 km/s, $P(f_{k,v} \mid r^{(2)})$=0.9. When the speed of the game object is 45 km/s, a corresponding value of $P(f_{k,v} \mid r^{(2)})$ is a median value between 0.8 and 0.9, namely, 0.85.

For the left-turn intent, this is similar, and details are not described herein. It should be noted that, compared with the straight-through topology, the left-turn topology has a larger curvature. Consequently, the reference speed is smaller, and the reference orientation angle is larger. Therefore, compared with the straight-through probability density distribution, the probability density distribution of the reference speed is more centralized, and the probability density distribution of the reference orientation angle is flatter. Details are not described in this application.

Based on the foregoing descriptions, after the likelihood probability of the target eigenvector is determined based on the probability density distribution dataset constructed in advance, the intent probability that the game object travels along each road topology is determined based on the likelihood probability. In some implementations of this application, an implementation of determining, based on the likelihood probability, the intent probability that the game object travels along each road topology may be as follows: First, a prior intent probability that the obstacle travels along each road topology is obtained. Then, the intent probability that the game object travels along each road topology is calculated based on the likelihood probability and the prior intent probability by using a Bayesian inference algorithm. The calculation method may be shown in Formula (14):

$$P\big(r_k = r^{(i)}, k = i \mid f_{k,pos}, f_{k,\theta}, f_{k,v}\big) = \frac{P_{r^{(i)}} P\big(f_{k,pos} \mid r^{(i)}\big) P\big(f_{k,\theta} \mid r^{(i)}\big) P\big(f_{k,v} \mid r^{(i)}\big)}{\sum_{i=1}^{l} P_{r^{(i)}} P\big(f_{k,pos} \mid r^{(i)}\big) P\big(f_{k,\theta} \mid r^{(i)}\big) P\big(f_{k,v} \mid r^{(i)}\big)} \quad (14)$$

Herein, $f_{k,pos}$, $f_{k,\theta}$, and $f_{k,v}$ are target eigenvectors, and may be obtained according to the foregoing Formula (13); $P(f_{k,pos} \mid r^{(i)})$, $P(f_{k,\theta} \mid r^{(i)})$, and $P(f_{k,v} \mid r^{(i)})$ are a position probability density, an orientation angle probability density, and a speed probability density (as shown in FIG. 8 or FIG. 9) in the road topology $r^{(i)}$, and represent likelihood probabilities of the eigenvectors ($f_{k,pos}$, $f_{k,\theta}$, $f_{k,v}$) obtained when the game object has an intent in a direction of $r^{(i)}$; and $P(f_{k,pos} \mid r^{(i)})$, $P(f_{k,\theta} \mid r^{(i)})$, and $P(f_{k,v} \mid r^{(i)})$ are calculated in advance and stored on the ego vehicle. A data distribution set of $P(f_{k,pos} \mid r^{(i)})$, $P(f_{k,\theta} \mid r^{(i)})$, and $P(f_{k,v} \mid r^{(i)})$ may be correspondingly stored at each target speed (for example, V=10, 30, or 50). When a V corresponds to a real-time speed of the observed current game object, $P(f_{k,pos} \mid r^{(i)})$, $P(f_{k,\theta} \mid r^{(i)})$, and $P(f_{k,v} \mid r^{(i)})$ in a corresponding set are used. If the real-time speed of the current game object is 15 km/s, and a likelihood probability at this speed does not exist in a database, an interpolation of likelihood probabilities at two adjacent Vs may be used. For example, when V=10 km/s, $P(f_{k,pos} \mid r^{(i)})$ =0.10, $P(f_{k,\theta} \mid r^{(i)})$ =0.21, and $P(f_{k,v} \mid r^{(i)})$ =0.30, and when V=30 km/s, $P(f_{k,pos} \mid r^{(i)})$ =0.19, $P(f_{k,\theta} \mid r^{(i)})$ =0.10, and $P(f_{k,v} \mid r^{(i)})$ =0.39. In this case, likelihood probabilities corresponding to the real-time speed 15 km/s of the current game object in the road topology $r^{(i)}$ are 0.15, 0.16, and 0.35, respectively (for details, refer to the foregoing description). $P_{r_{(i)}}$ is the prior probability of the game object in the road topology $r^{(i)}$, namely, a prior probability of traveling along the road topology $r^{(i)}$ in the future, and comes from an upstream prediction module. $P(r_k = r^{(i)}, k = i \mid f_{k,pos}, f_{k,\theta}, f_{k,v})$ is a posterior probability of the intent $r^{(i)}$, namely, an intent probability that the game object travels along $r^{(i)}$, obtained after both an observed current status and the prior probability of the game object are considered.

In conclusion, a core idea of inferring the intent posterior probability is as follows: The likelihood probability $P(f_k \mid r^{(i)})$ of each feature status may be obtained by using an observed state (namely, the real-time status information) of the game object and a corresponding feature reference status (namely, the feature reference information); and based on the prior probability $P_{r_{(i)}}$ of each intent, the posterior probability $P(r_k = r^{(i)})$ of each intent in the observed current status may be obtained through calculation according to the Bayesian method.

It should be noted that in some implementations of this application, if it is difficult to obtain the prior probability $P_{r_{(i)}}$, the prior probability may not be required. In this case, in an example, an average of probabilities may be obtained based on a quantity of road topologies in which a target vehicle is located. For example, in the foregoing embodiment of this application, it is assumed that the feature reference information includes two road topologies in total: the straight-through topology and the left-turn topology which are both owned by the game object. In this case, the prior probability is considered as 0.5.

In the foregoing instance of this application, the ego vehicle may separately obtain the straight-through intent probability $P(r_k = r^{(2)})$ and the left-turn intent probability $P(r_k = r^{(1)})$ of the game object. The game object is in a straight-through/left-turn multi-intent lane, and according to a traffic rule, the game object cannot turn right. Therefore, $P(r_k = r^{(1)}) + P(r_k = r^{(2)}) = 1$.

503: Construct game sampling space for the game object based on real-time status information of the ego vehicle and the real-time status information of the game object, where the game sampling space includes m game strategies, and $m \geq 1$.

After obtaining the real-time status information of the game object, the ego vehicle may further obtain real-time status information of the ego vehicle (for example, vehicle information of the ego vehicle collected by a sensor system of the ego vehicle), and construct the game sampling space for the game object based on the real-time status information of the ego vehicle and the real-time status information of the game object (road condition information may also be added). The game sampling space includes m game strategies, and $m \geq 1$.

It should be noted that, in embodiments of this application, an implementation of constructing the game sampling space for the game object may be as follows: Kinematic deduction is performed on all horizontal and vertical feasible space of the ego vehicle and the game object. The horizontal and vertical feasible space is not limited to continuous distribution, discrete distribution, mixed continuous and discrete distribution, decision-making considering behavior indetermination, and the like. This is not limited in this application. For ease of description, in this application, a discrete distribution method is used to construct the game sampling space. Specifically, the game sampling space may include vertical feasible space and horizontal feasible space, which are separately described below.

(1) Vertical feasible space

A vertical game strategy of the ego vehicle and the game object may be represented by a magnitude of an acceleration/a deceleration (grab/yield), that is, represented by vertical acceleration offset sampling. First, a decision-making upper limit and a decision-making lower limit of a game strategy (an acceleration) are generated, which may be obtained based on a vertical kinetic constraint and a kinematic constraint on the vehicle and relationships such as a position of the ego vehicle relative to the game object and a speed of the ego vehicle relative to the game object. Then, according to a preset rule, a decision-making strategy (namely, an action) of the ego vehicle and a decision-making strategy (namely, an action) of the game object are obtained from the decision-making upper limit and the decision-making lower limit. Finally, at least one game strategy (namely, an action pair) of the ego vehicle and the game object may be obtained by combining the decision-making strategy of the ego vehicle and the decision-making strategy of the game object. In an example, in view of a balance between calculation complexity and precision of the strategy sampling space, an acceleration interval may be set to 1 m/s². For example, vertical strategy sampling space shown in Table 2, namely, vertical feasible space, may be finally generated. Herein, acc is an acceleration absolute value of a vehicle (the ego vehicle or the game object).

**Table 2: Vertical strategy sampling space (vertical feasible space)**

| Ego vehicle acc / Game object acc | −4 | −3 | −2 | −1 | 0 | 1 | 2 | 3 |
|---|---|---|---|---|---|---|---|---|
| −4 | | | | | | | | |
| −3 | | | | | | | | |
| −2 | | | | | | | | |
| −1 | | | | | | | | |
| 0 | | | | | | | | |
| 1 | | | | | | | | |
| 2 | | | | | | | | |
| 3 | | | | | | | | |

It should be noted that Table 2 shows sampling of 8*8=64 vertical acceleration offsets of the ego vehicle and the game object in total. Table 2 is merely an example, and does not constitute a limitation on this application. During actual application, an interval of vertical acceleration offset sampling and an offset degree may be set based on an actual scenario. Details are not described in this application.

(2) Horizontal feasible space

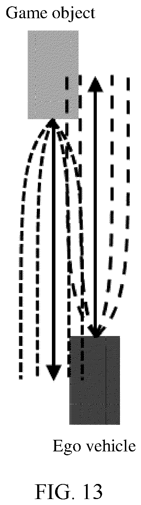

A horizontal game strategy of the ego vehicle and the game object may be represented by a magnitude of a horizontal position offset, as shown in FIG. 13. Similarly, first, a decision-making upper limit and a decision-making lower limit of a game strategy (a horizontal position offset) are generated, which may be obtained based on a vertical kinetic constraint and a kinematic constraint on the vehicle and relationships such as a position of the ego vehicle relative to the game object and a speed of the ego vehicle relative to the game object. Then, according to a preset rule, a decision-making strategy (namely, an action) of the ego vehicle and a decision-making strategy (namely, an action) of the game object are obtained from the decision-making upper limit and the decision-making lower limit. Finally, at least one game strategy (namely, an action pair) of the ego vehicle and the game object may be obtained by combining the decision-making strategy of the ego vehicle and the decision-making strategy of the game object. In an example, in view of a balance between calculation complexity and strategy sampling space precision, a horizontal position offset interval may be set to 1 m. For example, horizontal strategy sampling space, namely, the horizontal feasible space, shown in Table 3 may be finally generated.

**Table 3: Vertical strategy sampling space (vertical feasible space)**

| Horizontal offset of the ego vehicle / Horizontal offset of the game object | −3 | −2 | −1 | 0 | 1 | 2 | 3 |
|---|---|---|---|---|---|---|---|
| −3 | | | | | | | |
| −2 | | | | | | | |
| −1 | | | | | | | |
| 0 | | | | | | | |
| 1 | | | | | | | |
| 2 | | | | | | | |
| 3 | | | | | | | |

It should also be noted that Table 3 shows sampling of 7*7=49 horizontal position offsets of the ego vehicle and the game object in total. Table 3 is merely an example, and does not constitute a limitation on this application. During actual application, an interval of horizontal position offset sampling and an offset degree may be set based on an actual scenario. Details are not described in this application.

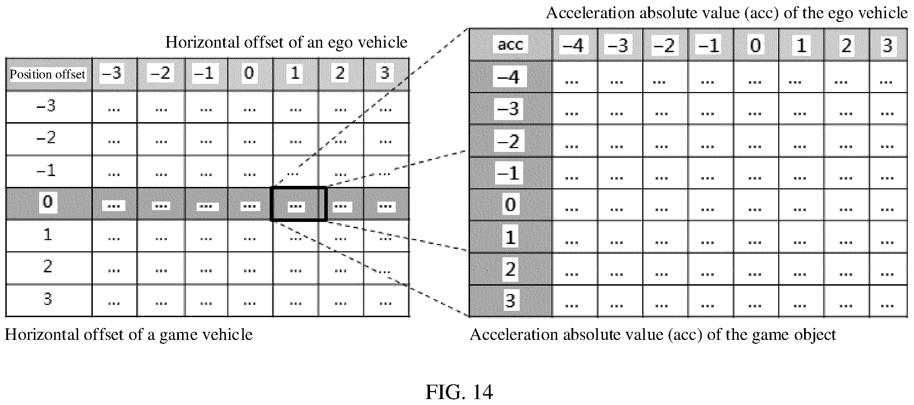

It should be further noted that a grid of a vertical acceleration offset may be obtained by expanding each small cell in a grid of a horizontal position offset. Table 2 and Table 3 are used as examples. Sampling is performed on all other horizontal position offsets and vertical acceleration offsets of the ego vehicle and the game object. There are 49 horizontal offset combinations (seven for the ego vehicle and seven for the social vehicle, and 7*7=49) in total, and there are 8*8=64 vertical acceleration offset samples in total in each sampled horizontal offset combination (for details, refer to FIG. 14). Finally, 49*64=3136 action pairs (which may also be referred to as action combinations) are formed. Each action pair is a game strategy in the game sampling space, that is, m=3136. The game sampling space includes 3136 game strategies.

It should be further noted that in embodiments of this application, step 502 and step 503 may be performed in no particular order. Step 502 may be performed before step 503, or step 503 may be performed before step 502, or step 502 and step 503 may be performed simultaneously. This is not specifically limited in this application.

504: Calculate strategy costs of the m game strategies in each road topology, to obtain n groups of strategy costs, where each group of strategy costs includes m strategy costs that are in a one-to-one correspondence with the m game strategies.

After the game sampling space including the m game strategies is constructed (namely, action pairs formed by all the feasible actions of the ego vehicle and the feasible actions of the game object), for each combination of horizontal and vertical actions of the ego vehicle and horizontal and vertical actions of the game object, a strategy cost of the combination in each road topology is evaluated, to obtain n groups of strategy costs. Each group of strategy costs includes m strategy costs that are in a one-to-one correspondence with the m game strategies. For example, Table 2 and Table 3 are still used as an example. It can be learned from Table 2 and Table 3 that the constructed game sampling space includes 3136 game strategies in total. It is assumed that the game object has two road topologies (that is, n=2). In this case, two groups of strategy costs respectively corresponding to the two road topologies are obtained in total, and each group of strategy costs includes 3136 game strategies.

It should be noted that, in some implementations of this application, the strategy cost (cost) may be evaluated based on a status of future motion interaction between the ego vehicle and the game object. A lower cost indicates a higher strategy gain and a higher probability that the strategy is used as an optimal strategy. Specifically, an implementation of calculating strategy costs of the m game strategies in each road topology may be as follows: Factors of the strategy costs of the m game strategies in each road topology are determined, such as at least one or more of safety, comfort, trafficability, a right of way, a horizontal offset, a risk area, and an inter-frame association. Then, a factor cost of each factor in each strategy cost is calculated, where a manner of calculating the factor cost may be determining a weight of each factor in advance, for example, a safety weight, a comfort weight, a trafficability weight, a right-of-way weight, a horizontal offset weight, a risk area weight, and an inter-frame association weight (values of the weights may be different). The factor cost of each factor in each strategy cost is weighted based on each weight, to obtain the strategy costs of the m game strategies in each road topology. A value obtained by multiplying each factor by a corresponding weight is referred to as a factor cost value, for example, a safety cost value, a comfort cost value, a trafficability cost value, a right-of-way cost value, a horizontal offset cost value, a risk area cost value, and an inter-frame association cost value. The factor cost values may be obtained through calculation according to different cost functions, which may be correspondingly referred to as a safety cost function, a comfort cost function, a trafficability cost function, a right-of-way cost function, a horizontal offset cost function, a risk area cost function, an inter-frame association cost function, and the like. In some implementations, the foregoing factor cost values may alternatively be normalized, and a value interval is [0,1]. For ease of understanding, the following describes each factor and factor cost value of the strategy cost, including but not limited to:

(1) Safety

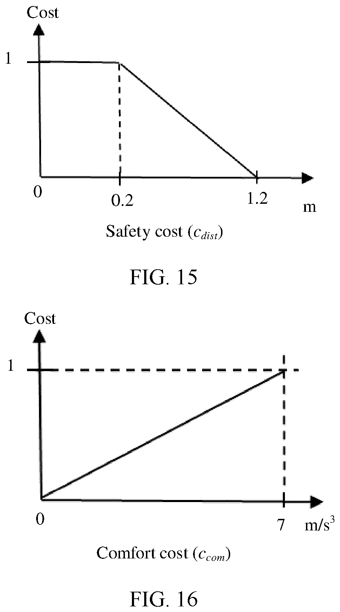

The safety cost value (which may be referred to as a safety cost) may be obtained through calculation according to a safety cost function in which a relative distance between the ego vehicle and another vehicle (namely, the game object) is as an independent variable, and the safety cost is negatively correlated with the relative distance. For example, a larger relative distance between two vehicles indicates a lower safety cost. In some implementations, a relative speed, a relative angle, and the like of interaction between the ego vehicle and the game object may be further considered for the safety cost. In an example, FIG. 15 is a diagram of a safety cost function obtained after normalization processing. Herein, $c_{dist}$ is the safety cost and corresponds to a vertical coordinate in FIG. 15, and dist is the relative distance between the ego vehicle and the game object and corresponds to a horizontal coordinate in FIG. 15.

(2) Comfort

The comfort cost value may be referred to as a comfort cost for short. The comfort cost of a vehicle (the ego vehicle or the game object) may be obtained through calculation according to a comfort cost function in which an absolute value of an acceleration change rate (namely, a jerk) is used as an independent variable. In an example, FIG. 16 is a diagram of a comfort cost function obtained after normalization processing. Herein, $c_{com}$ is the comfort cost and corresponds to a vertical coordinate in FIG. 16, and a horizontal coordinate in FIG. 16 is the jerk, namely, the acceleration change rate of the ego vehicle or the game object.

It should be noted that, in some implementations of this application, the acceleration change rate of the vehicle (the ego vehicle or the game object) may be a vertical acceleration change rate, a horizontal acceleration change rate, or a weighted sum of a vertical acceleration change rate and a horizontal acceleration change rate. Generally, a smaller horizontal/vertical acceleration change rate of the ego vehicle or the game object indicates higher comfort and a lower comfort cost. In some implementations, the comfort cost may be a comfort cost of the ego vehicle, a comfort cost of the game object, or a weighted sum of a comfort cost of the ego vehicle and a comfort cost of the game object.

(3) Trafficability

The trafficability cost value may be referred to as a trafficability cost for short, and may be obtained through calculation according to a trafficability cost function in which a speed change rate of the ego vehicle or the game object is used as an independent variable. For example, if a vehicle decelerates greatly for yield, a speed loss (a difference between a current speed and a future speed, namely, an acceleration) is large or a waiting time is long. As a result, a trafficability cost of the vehicle is increased. For another example, if a vehicle accelerates greatly for grab, a speed increase (a difference between a current speed and a future speed, namely, an acceleration) is large or a waiting time is short. As a result, a trafficability cost of the vehicle is decreased.

It should be noted that, in some implementations of this application, the trafficability cost may alternatively be obtained through calculation according to a trafficability cost function in which a proportion of a relative speed of the ego vehicle or the game object is used as an independent variable. For example, before an action is performed, an absolute value of a speed of the ego vehicle accounts for a larger proportion in a sum of absolute values of speeds of the ego vehicle and the game object, and an absolute value of a speed of the game object accounts for a smaller proportion in the sum of the absolute values of the speeds of the ego vehicle and the game object. After the behavior action pair is performed, if the ego vehicle decelerates greatly for yield, a speed loss of the ego vehicle increases, and the speed proportion decreases. As a result, a trafficability cost corresponding to performing the behavior action by the ego vehicle is higher. Similarly, after the behavior action pair is performed, if the game object accelerates greatly for grab, the speed of the game object increases, and the speed proportion increases. As a result, a trafficability cost corresponding to performing the behavior action by the game object is lower.

It should be noted that, in some implementations of this application, the trafficability cost may be the trafficability cost that is of the ego vehicle and that corresponds to performing the action pair by the ego vehicle, or may be the trafficability cost that is of the game object and that corresponds to performing the action pair by the game object, or may be a weighted sum of the trafficability cost that is of the ego vehicle and that corresponds to performing the action pair by the ego vehicle and the trafficability cost that is of the game object and that corresponds to performing the action pair by the game object. This is not specifically limited in this application.

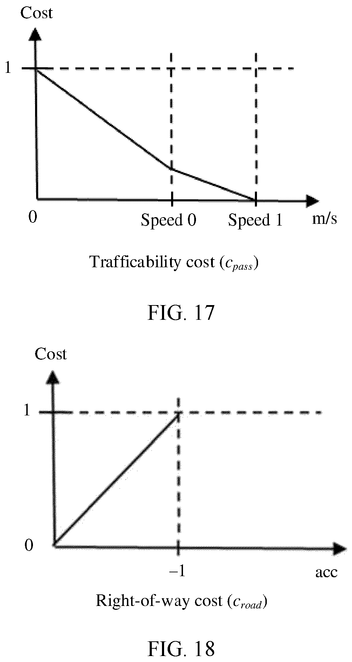

In an example, FIG. 17 is a diagram of a trafficability cost function obtained after normalization processing. Herein, $c_{pass}$ is a trafficability cost and corresponds to a vertical coordinate in FIG. 17, and a speed is an absolute value of a speed of a vehicle and corresponds to a horizontal coordinate in FIG. 17. An absolute value of a middle-point speed of the vehicle is a speed 0, and a maximum value of the absolute value of the speed of the vehicle is a speed 1.

(4) Right of way

The right-of-way cost value may be referred to as a right-of-way cost for short. Right-of-way information corresponding to a vehicle may be determined based on an obtained user profile of the ego vehicle or the game object. For example, if a driving behavior of the game object is in a radical style and a grab strategy is more likely to be adopted, a right of way is high. If a driving behavior of the game object is in a conservative style and a yield strategy is more likely to be adopted, a right of way is low. In a case of a high right of way, a specified motion status or a specified traveling behavior is more likely to be maintained. In a case of a low right of way, a specified motion status or a specified traveling behavior is more likely to be changed.

In embodiments of this application, the user profile may be determined based on the gender, the age, and a completion status of a historical behavior action of a user. In some implementations, a cloud server may obtain data required for determining the user profile, and determine the user profile. If a behavior action pair performed by the ego vehicle and/or the game object enables a vehicle with a high right of way to change a motion status, a right-of-way cost corresponding to the behavior action pair is high, and a gain is low. In some implementations, a higher right-of-way cost may be further determined for a behavior decision that causes a change in a motion status of a vehicle with a high right of way, to increase a penalty. With this feedback mechanism, a behavior action pair in which the vehicle with the high right of way maintains a current motion status has a higher right-of-way gain, namely, a lower right-of-way cost.

In an example, FIG. 18 is a diagram of a right-of-way cost function obtained after normalization processing. Herein, $c_{road}$ is a right-of-way cost and corresponds to a vertical coordinate in FIG. 18, and acc is an acceleration absolute value of a vehicle (the ego vehicle or the game object) and corresponds to a horizontal coordinate in FIG. 18.

(5) Risk area

The risk area cost value may be referred to as a risk area cost for short. For example, if a vehicle (the ego vehicle or the game object) is in a risk area on a road (in the area, there is a high traveling risk and the vehicle needs to leave the area as soon as possible), a high-risk area cost needs to be applied to a vehicle yield strategy to increase a penalty. Instead of selecting a vehicle yield behavior, a vehicle grab behavior is selected as an outcome of decision-making, so that the vehicle leaves the risk area as soon as possible. In other words, a decision that the vehicle leaves the risk area as soon as possible is made. This ensures that the vehicle leaves the risk area as soon as possible and does not severely affect traffic.

(6) Horizontal offset

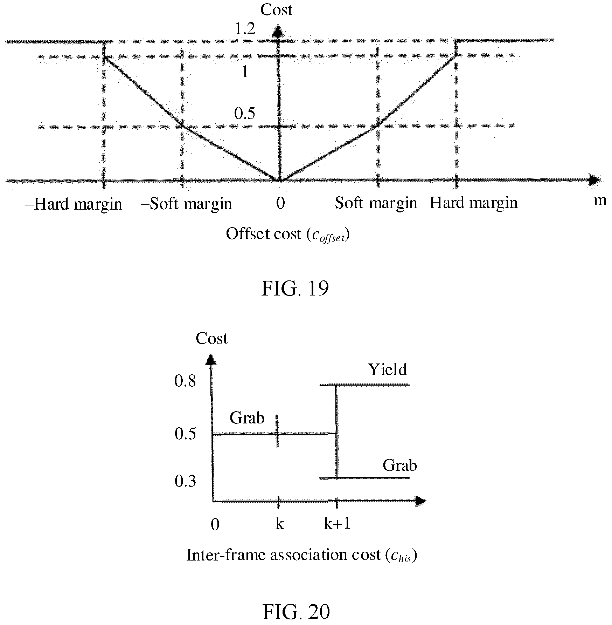

The horizontal offset cost value may also be referred to as an offset cost, and may be obtained through calculation according to a horizontal offset of the ego vehicle or the game object. In an example, FIG. 19 is a diagram of a horizontal offset cost function obtained after normalization processing. Herein, $c_{offset}$ is an offset cost and corresponds to a vertical coordinate in FIG. 19, and offset is a horizontal offset of a vehicle in m and corresponds to a horizontal coordinate in FIG. 19. A longer offset distance of the ego vehicle/the game object indicates that the offset cost increases segment by segment. After the offset cost exceeds a soft margin of a road, a slope of the offset cost increases. After the offset cost exceeds a hard margin of the road, the offset cost increases by a larger penalty. In other words, a larger horizontal offset of the vehicle indicates a lower horizontal offset gain and a higher offset cost. In addition, after the horizontal offset of the vehicle exceeds a median value of the horizontal offset, the offset cost increases faster, to increase the penalty. After the horizontal offset of the vehicle exceeds an upper threshold of the horizontal offset, the horizontal offset cost becomes a fixed value, for example, 1.2, to increase the penalty.

(7) Inter-frame association

The inter-frame association cost value may also be referred to as an inter-frame association cost. If a decision of a previous frame is to get the grab on the game object, a grab cost of the frame properly decreases, and a yield cost of the frame properly increases. A decision of getting the grab is more likely to be output, and a motion status is consistent with that of the previous frame, to stabilize a decision-making status in time domain. This is similar for yield. In an example, FIG. 20 is a diagram of an inter-frame association cost function obtained after normalization processing. An intent decision of a previous frame K of the ego vehicle is to get the grab on the game object. If an intent decision of a current frame K+1 of the ego vehicle is to get the grab on the game object, a corresponding inter-frame association cost is lower, for example, 0.3 (a default value is 0.5), and therefore there is a reward. If an intent decision of a current frame K+1 of the ego vehicle is to yield to the game object, a corresponding inter-frame association cost is higher, for example, 0.8 (a default value is 0.5), and therefore there is a penalty. In this case, a strategy that the intent decision of the current frame of the ego vehicle is to get the grab on the game object is selected as a feasible solution to the current frame. Based on the penalty or the reward for the inter-frame association cost, it can be ensured that the intent decision of the current frame of the ego vehicle is consistent with the intent decision of the previous frame, so that the motion status of the ego vehicle in the current frame is consistent with the motion status in the previous frame, and behavior decision-making of the ego vehicle is stabilized in time domain.

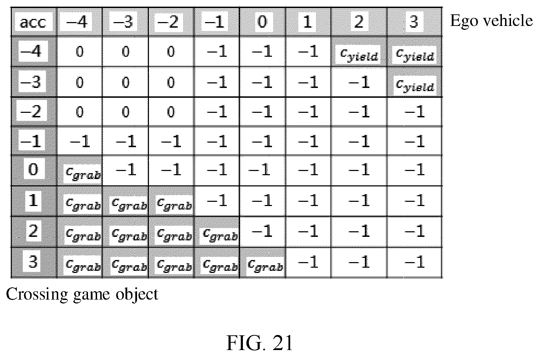

In addition, weights of the foregoing costs may also be different, and a total cost of an action pair may be obtained by performing weighted summation on the costs. A sequence of reaching a conflict area (namely, an area in which the two vehicles meet) is deduced based on sampled actions of the two vehicles corresponding to the costs. Cases in Table 2 and Table 3 are used as examples. On the basis of this, a case in which the ego vehicle reaches first may be classified as a cost (which may be denoted as $c_{grab}$) of getting the grab on the game object shown in FIG. 21. Otherwise, the case may be classified as a cost ($c_{yield}$) of yield to the game object. The weights may be allocated as follows: safety weight>right-of-way weight>horizontal offset weight>trafficability weight>comfort weight>inter-frame association weight. In view of safety, a scenario (namely, a very dangerous solution, denoted as -1) in which the two vehicles pass through the conflict area at excessively approximate moments should be excluded, and a scenario (namely, an actually infeasible solution, denoted as 0) in which both vehicles stop in front of the conflict area should be excluded. After induction, game strategies sharing the following conditions may form a feasible domain, as shown in FIG. 21.

In conclusion, in embodiments of this application, the strategy cost of each game strategy in the game sampling space needs to be worked out for each of the n road topologies, to obtain n groups of strategy costs in total. Each group of strategy costs includes m strategy costs, and the m strategy costs are in a one-to-one correspondence with the m game strategies. For ease of understanding the foregoing process, the following uses the instance corresponding to FIG. 6 or FIG. 7 as an example for description. In FIG. 6 or FIG. 7, the game object has the left-turn road topology and the straight-through road topology. Therefore, the left-turn intent and the straight-through intent need to be separately worked out. Details are separately described below.

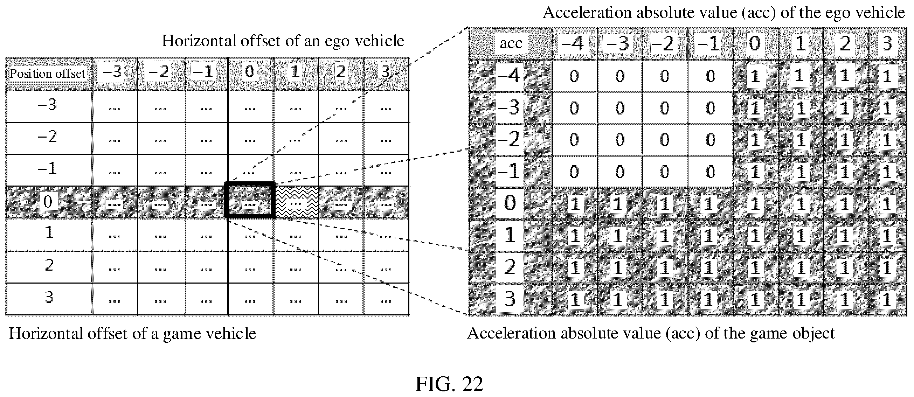

For the left-turn intent of the game object, a game process is as follows: First, a track on which horizontal position offsets of both the ego vehicle and the game object are 0 is sampled (as shown in a framed cell in the grid on the left of FIG. 22). On the basis of this, vertical accelerations of the ego vehicle and the game object (eight vertical actions of the ego vehicle and eight vertical actions of the game object, and 64 combinations in total, as shown in the grid on the right of FIG. 22) are sampled. Then, a track on which a horizontal position offset of the ego vehicle is 1 and a horizontal position offset of the game object is 0 is sampled (as shown in a wavy-line cell in the grid on the left of FIG. 22). On the basis of this, vertical accelerations of the ego vehicle and the game object (eight vertical actions of the ego vehicle and eight vertical actions of the game object, and 64 in total, as shown in the grid on the right of FIG. 22) are sampled. Similarly, sampling is performed on all other horizontal position offsets and vertical acceleration offsets of the ego vehicle and the game object. There are 49 horizontal offset combinations (seven for the ego vehicle and seven for the game object, and 7*7=49) in total, and there are 8*8=64 vertical acceleration offset samples in total in each sampled horizontal offset combination. Finally, 49*64=3136 action pairs are formed. According to the foregoing method for calculating the cost of each factor, the strategy cost of each action pair can be calculated. There are 3136 (that is, m=3136) strategy costs in total, which may be expressed as Formula (15):

$$actionPair_{left,i}, i \in [1, 3136]$$

$$cost_{left,i}, i \in [1, 3136] \quad (15)$$

Herein, *actionPair*$_{left,i}$ is an action pair, and *cost*$_{left,i}$ corresponds to a strategy cost under a left-turn intent of the action pair.

Similarly, for the straight-through intent of the game object, 3136 action pairs and 3136 corresponding strategy costs under the straight-through intent may be obtained according to the foregoing steps, and may be expressed as Formula (16):

$$actionPair_{straight,i}, i \in [1, 3136]$$

$$cost_{straight,i}, i \in [1, 3136] \quad (16)$$

Herein, *actionPair*$_{straight,i}$ is an action pair, and *cost*$_{straight,i}$ corresponds to a strategy cost under a straight-through intent of the action pair.

It should be noted that in embodiments of this application, step 502 and step 504 may be performed in no particular order. Step 502 may be performed before step 504, or step 504 may be performed before step 502, or step 502 and step 504 may be performed simultaneously. This is not specifically limited in this application.

505: Determine, based on the n intent probabilities and the n groups of strategy costs, n target strategy costs corresponding to a total cost that meets a preset condition, and determine an outcome of decision-making of the ego vehicle based on a target game strategy, where the n target strategy costs are strategy costs of the target game strategy in all the road topologies, and the target game strategy is one of the m game strategies.

The intent probabilities (n intent probabilities in total) in all the road topologies of the game object are already obtained through calculation in step 502. Then, the ego vehicle determines, based on the n intent probabilities and the n groups of strategy costs obtained in step 504, the n target strategy costs corresponding to the total cost that meets the preset condition. The n target strategy costs are the strategy costs of the target game strategy in all the road topologies, and the target game strategy is one of the m game strategies.

It should be noted that, in some implementations of this application, an implementation of determining, based on the n intent probabilities and the n groups of strategy costs, the n target strategy costs corresponding to the total cost that meets the preset condition may be as follows: The n intent probabilities are respectively used as weights of the n road topologies, and a weighted strategy cost corresponding to each game strategy in the n groups of strategy costs is calculated, to obtain m total costs. Then, a total cost with a minimum value is determined from the m total costs. Finally, the n target strategy costs corresponding to the total cost with the minimum value are further determined. Specifically, a calculation manner may be shown in Formula (17):

$$TotalCost_i = P_1 Cost_{1,i} + P_2 Cost_{2,i} + \cdots + P_n Cost_{2,i}, i \in [1, m] \quad (17)$$

A final outcome of indeterminate interactive game decision-making of the ego vehicle may be obtained by selecting an action actionPair$_i$ corresponding to a minimum TotalCost$_i$ (namely, total cost). In other words, a principle of working out a solution in embodiments of this application is as follows: The determinate interactive game solution is combined with the intent probability to form a framework of indeterminate interactive game, to work out an optimal decision under an indeterminate intent.

For ease of understanding the foregoing process, the following still uses the instance corresponding to FIG. 6 or FIG. 7 as an example for description. In FIG. 6 or FIG. 7, the game object has the left-turn road topology and the straight-through road topology. After the determinate strategy cost under each intent is obtained in a process of performing step 504, with reference to the intent probability P($r_k = r^{(i)}$) obtained through calculation in step 502, a comprehensive strategy cost that is of each action of the ego vehicle and that is obtained when indetermination of the intent of the game object is considered may be obtained. A calculation method is shown in Formula (18):

$$TotalCost_i = P_1 Cost_{left,i} + P_2 Cost_{straight,i}, i \in [1, 3136] \quad (18)$$

The action actionPair$_i$ corresponding to the minimum TotalCost$_i$ (namely, total cost) is selected as the final outcome of indeterminate interactive game decision-making of the ego vehicle. In embodiments of this application, $P_1 = 0.3$, and $P_2 = 0.7$. In other words, there is a high probability (0.7) that the game object needs to continue to go straight. If the impact of $P_1$ and $P_2$ is not considered, according to a conventional method, a specific intersection point exists between a left-turn track of the game object and a reference track of the ego vehicle, and there is a risk of collision. In this case, the minimum cost in cost$_{left,i}$, $i \in [1, 3136]$ is searched for as the optimal solution, and a corresponding action is output. In other words, the ego vehicle decelerates at $-2 \, \text{m/s}^2$ vertically for yield, and shifts horizontally to the right by 1 m for avoidance. The final outcome of decision-making is as follows: shifting horizontally to the right for avoidance and yielding vertically. However, in fact, the game object keeps going straight in the future and does not turn left. Therefore, braking and stop of the ego vehicle are improper. The pulsating brake not only deteriorates comfort experience, but also affects traffic efficiency. In this application, indetermination of the intent is considered. Consequently, the optimal action of the ego vehicle changes to driving at a constant speed $0 \, \text{m/s}^2$, and shifting horizontally to the right by 1 m for avoidance. The final outcome of decision-making is as follows: shifting horizontally to the right for avoidance and making a grab vertically. This ensures trafficability while ensuring safety. Finally, the game object keeps going straight, and the ego vehicle quickly passes through the intersection at a stable speed.

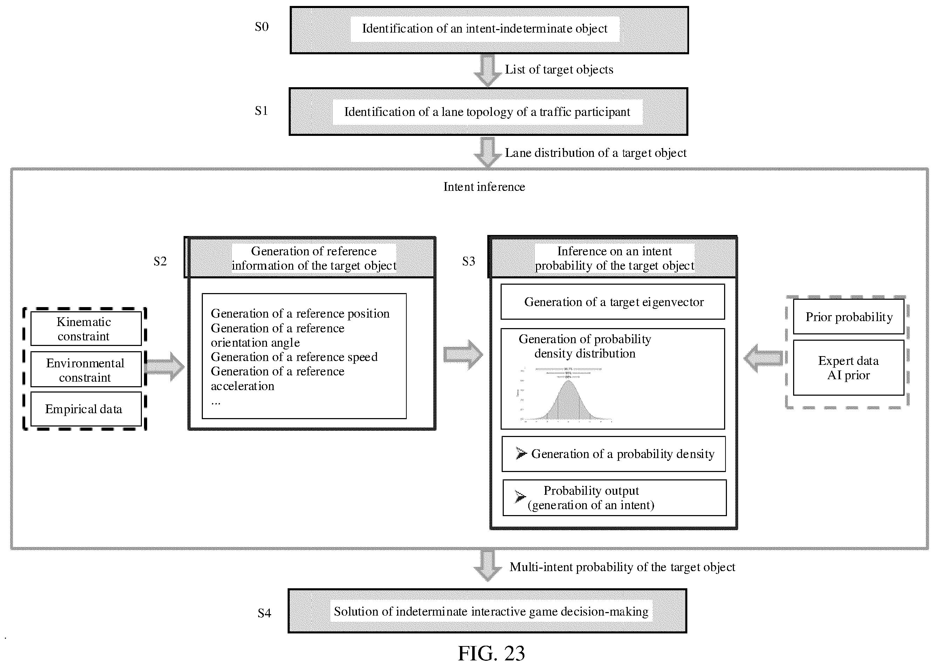

In conclusion, a core procedure architecture of the intelligent driving decision-making method provided in embodiments of this application may be shown in FIG. 23, and mainly includes the following parts: S0: Identification of an intent-indeterminate object (namely, a game object) (as described in step 501); S1: Identification of a road topology of a traffic participant (as described in step 501); S2: Generation of feature reference information of a target object (namely, a specific game object) (as described in step 502); S3: Inference on each intent probability of the target object (as described in step 502); and S4: Solution of indeterminate interactive game decision-making of each intent probability (as described in steps 503 to 505).

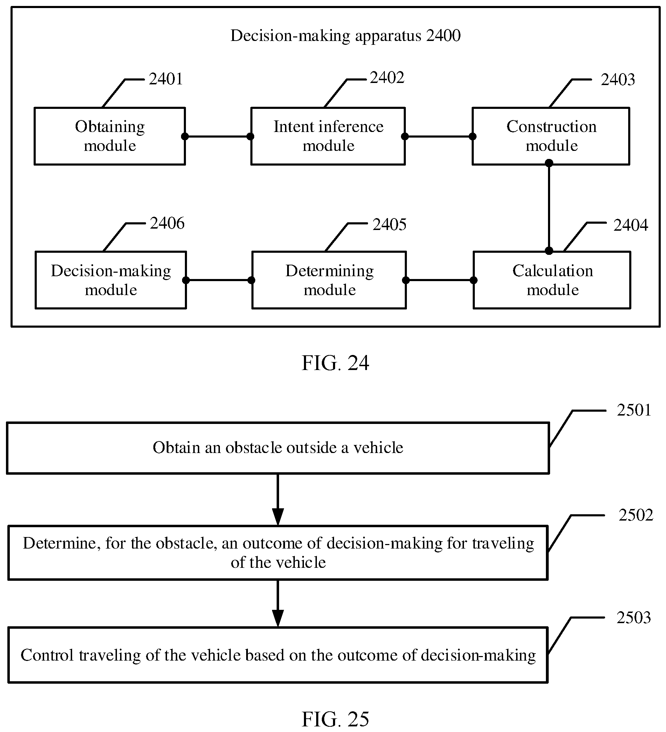

Based on the corresponding embodiments, the following further provides a related device configured to implement the foregoing solutions, to better implement the solutions in embodiments of this application. Specifically, FIG. 24 is a diagram of a structure of a decision-making apparatus according to an embodiment of this application. The decision-making apparatus 2400 includes an obtaining module 2401, an intent inference module 2402, a construction module 2403, a calculation module 2404, a determining module 2405, and a decision-making module 2406. The obtaining module 2401 is configured to: determine a game object, and obtain real-time status information of the game object. The game object is an obstacle that has n road topologies, and $n \geq 2$. The intent inference module 2402 is configured to determine, based on the real-time status information of the game object, an intent probability that the game object travels along each road topology, to obtain n intent probabilities. The construction module 2403 is configured to construct game sampling space for the game object based on real-time status information of the ego vehicle and the real-time status information of the game object. The game sampling space includes m game strategies, and $m \geq 1$. The calculation module 2404 is configured to calculate strategy costs of the m game strategies in each road topology, to obtain n groups of strategy costs. Each group of strategy costs includes m strategy costs that are in a one-to-one correspondence with the m game strategies. The determining module 2405 is configured to determine, based on the n intent probabilities and the n groups of strategy costs, n target strategy costs corresponding to a total cost that meets a preset condition. The n target strategy costs are strategy costs of a target game strategy in all the road topologies, and the target game strategy is one of the m game strategies. The decision-making module 2406 is configured to determine an outcome of decision-making of the ego vehicle based on the target game strategy.

In a possible design, the intent inference module 2402 is specifically configured to: obtain feature reference information of the game object in each road topology, where the feature reference information is used to describe a datum status of an intent of the game object to travel along each road topology in a current traffic environment status; and determine, based on the real-time status information of the game object and the feature reference information, the intent probability that the game object travels along each road topology.

In a possible design, the intent inference module 2402 is further specifically configured to: obtain a target eigenvector based on the real-time status information of the game object and the feature reference information; determine a likelihood probability of the target eigenvector based on a probability density distribution dataset constructed in advance, where the probability density distribution dataset includes probability density distribution of the eigenvector with different eigenvector values; and determine, based on the likelihood probability, the intent probability that the game object travels along each road topology.

In a possible design, the probability density distribution dataset includes a nonlinear probability density distribution dataset. The nonlinear probability density distribution dataset includes probability density distribution of eigenvectors with different speed values and different eigenvector values.

In a possible design, the intent inference module 2402 is further specifically configured to: obtain a prior intent probability that the obstacle travels along each road topology; and calculate, based on the likelihood probability and the prior intent probability by using a Bayesian inference algorithm, the intent probability that the game object travels along each road topology.

In a possible design, the feature reference information is obtained based on a target road point in each road topology, or the feature reference information is obtained based on a road congestion degree and/or a radical degree of a traveling style of the game object.

In a possible design, the real-time status information of the game object includes at least one or more of the following: real-time position information of the game object, a real-time orientation angle of the game object, a real-time speed of the game object, and a real-time acceleration of the game object. The feature reference information includes at least any one or more of the following: reference position information of the game object, a reference orientation angle of the game object, a reference speed of the game object, and a reference acceleration of the game object.

In a possible design, when no obstacle other than the ego vehicle exists around the game object, a value of the reference speed of the game object is obtained through calculation based on a kinematic constraint on the game object and/or an environmental traffic constraint on the game object.

In a possible design, the kinematic constraint includes at least any one or more of the following: a lane topology curvature speed limit, a start acceleration constraint, and a red-light deceleration constraint. The environmental traffic constraint includes at least any one or more of the following: a road speed limit of a lane in which the game object is located, a speed constraint on a preceding vehicle in the lane in which the game object is located, and a speed constraint on an obstacle in a lane other than the lane in which the game object is located.

In a possible design, when at least one first target obstacle located in front of the game object exists in the n road topologies, and a distance between the game object and the first target obstacle is shorter than a preset safe distance, the reference speed of the game object is obtained based on a speed of the first target obstacle.

In a possible design, when at least one second target obstacle exists in a traveling direction that is the same as that of the game object, and a road topology owned by the at least one second target obstacle does not belong to the n road topologies, the reference speed of the game object is obtained based on a datum speed of the at least one second target obstacle, and the datum speed is obtained according to a preset method.

In a possible design, when at least one third target obstacle exists in a crossing traveling direction of the game object, and a difference between moments at which the game object and the at least one third target obstacle reach a predicted collision point is greater than a preset threshold, the reference speed of the game object is the real-time speed of the game object.

In a possible design, when at least one third target obstacle exists in a crossing traveling direction of the game object, and a difference between moments at which the game object and the at least one third target obstacle reach a predicted collision point is less than or equal to a preset threshold, the reference speed of the game object is obtained based on the real-time speed of the game object, and the reference speed is lower than the real-time speed of the game object.

In a possible design, the determining module 2405 is specifically configured to: respectively use the n intent probabilities as weights of the n road topologies, and calculate a weighted strategy cost corresponding to each game strategy in the n groups of strategy costs, to obtain m total costs; determine a total cost with a minimum value from the m total costs; and determine the n target strategy costs corresponding to the total cost with the minimum value.

In a possible design, the calculation module 2404 is specifically configured to: determine factors of the strategy costs of the m game strategies in each road topology, where the factors of the strategy costs include at least one of safety, comfort, trafficability, a right of way, a horizontal offset, a risk area, and an inter-frame association; calculate a factor cost of each factor in each strategy cost; and weight the factor cost of each factor in each strategy cost, to obtain the strategy costs of the m game strategies in each road topology.

In a possible design, the construction module 2403 is specifically configured to: determine a decision-making upper limit and a decision-making lower limit of the ego vehicle and the game object based on the real-time status information of the ego vehicle and the real-time status information of the game object; obtain a decision-making strategy of the ego vehicle and a decision-making strategy of the game object from the decision-making upper limit and the decision-making lower limit according to a preset rule; and combine the decision-making strategy of the ego vehicle and the decision-making strategy of the game object, to obtain the m game strategies of the ego vehicle and the game object, where the m game strategies belong to the game sampling space.

In a possible design, the obtaining module 2401 is specifically configured to: obtain all road topologies in a range of a preset area around the ego vehicle; obtain obstacle information of at least one obstacle around the ego vehicle, and calculate a road topology of the at least one obstacle based on the obstacle information and all the road topologies; and determine, from the at least one obstacle, the obstacle having the n road topologies as the game object.

It should be noted that content such as an execution process and information exchange between the modules in the decision-making apparatus 2400 provided in FIG. 24 is based on a same concept as the method embodiment corresponding to FIG. 5 in this application. For specific content, refer to the descriptions in the method embodiment in this application. Details are not described herein again.

In addition, embodiments of this application further provide a vehicle traveling control method. Specifically, with reference to FIG. 25, the method may include the following steps.

2501: Obtain an obstacle outside a vehicle.

First, information about the obstacle in a range of a preset area (for example, within a surrounding radius of 10 m) outside the ego vehicle may be obtained.

2502: Determining, for the obstacle, an outcome of decision-making for traveling of the vehicle.

Then, for the obtained obstacle information, the outcome of decision-making for traveling of the vehicle, namely, an action that belongs to the ego vehicle and that is in an action pair formed by the ego vehicle and a game object, is determined according to any one of the foregoing intelligent driving decision-making methods.

2503: Control traveling of the vehicle based on the outcome of decision-making.

Finally, traveling of the vehicle is controlled based on the outcome of decision-making.

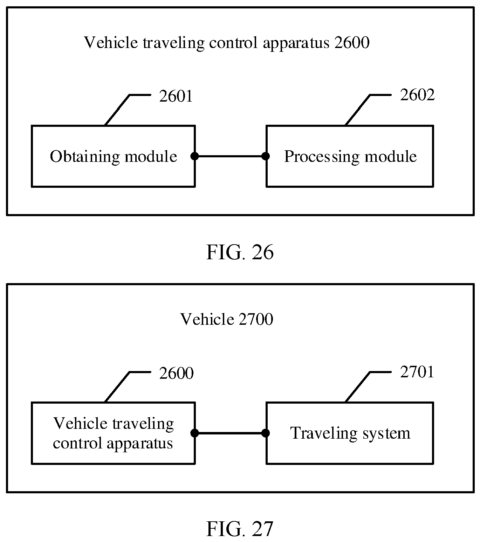

Similarly, based on the corresponding embodiments, the following further provides a related device configured to implement the foregoing solutions, to better implement the solutions in embodiments of this application. Specifically, FIG. 26 is a diagram of a structure of a vehicle traveling control apparatus according to an embodiment of this application. The vehicle traveling control apparatus 2600 includes an obtaining module 2601 and a processing module 2602. The obtaining module 2601 is configured to obtain an obstacle outside a vehicle. The processing module 2602 is configured to determine, for an obtained obstacle, an outcome of decision-making for traveling of the vehicle according to any one of the foregoing intelligent driving decision-making methods. The processing module 2602 is further configured to control traveling of the vehicle based on the outcome of decision-making.

It should be noted that content such as an execution process and information exchange between the modules in the vehicle traveling control apparatus 2600 provided in FIG. 26 is based on a same concept as the method embodiment corresponding to FIG. 25 in this application. For specific content, refer to the descriptions in the method embodiment in this application. Details are not described herein again.

In addition, embodiments of this application further provide a vehicle. Specifically, with reference to FIG. 27, the vehicle 2700 includes the vehicle traveling control apparatus 2600 and the traveling system 2701 shown in FIG. 26. The vehicle traveling control apparatus 2600 controls the traveling system 2701.

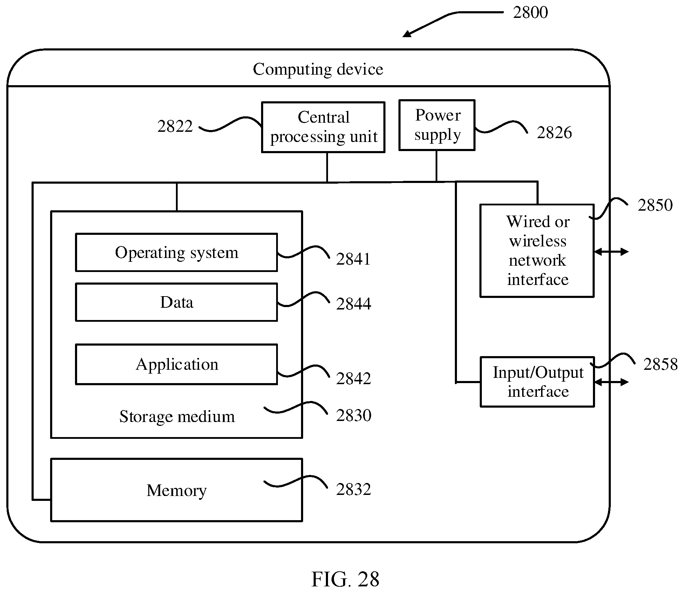

Embodiments of this application further provide a computing device. FIG. 28 is another diagram of a structure of the computing device according to an embodiment of this application. The modules in the decision-making apparatus 2400, the vehicle traveling control apparatus 2600, or the vehicle 2700 described in the embodiment corresponding to FIG. 24, FIG. 26, or FIG. 27 may be deployed on the computing device 2800. The computing device 2800 is configured to implement functions of the decision-making apparatus 2400, the vehicle traveling control apparatus 2600, or the vehicle 2700 in the embodiment corresponding to FIG. 24, FIG. 26, or FIG. 27. Specifically, the computing device 2800 is implemented by one or more servers. The computing device 2800 may vary greatly depending on different configurations or performance, and may include one or more central processing units (central processing units, CPU) 2822, a memory 2832, and one or more storage media 2830 (for example, one or more mass storage devices) that store an application program 2842 or data 2844. The memory 2832 and the storage medium 2830 may be transitory storage or persistent storage. The program stored in the storage medium 2830 may include one or more modules (not shown in the figure), and each module may include a series of instruction operations for the computing device 2800. Further, the central processing unit 2822 may be set to communicate with the storage medium 2830, to perform, in the computing device 2800, the series of instruction operations in the storage medium 2830.

The computing device 2800 may further include one or more power supplies 2826, one or more wired or wireless network interfaces 2850, one or more input/output interfaces 2858, and/or one or more operating systems 2841, for example, Windows ServerTM, Mac OS XTM, UnixTM, LinuxTM, and FreeBSDTM.

In embodiments of this application, the central processing unit 2822 is configured to perform the intelligent driving decision-making method in the embodiment corresponding to FIG. 5 or the vehicle traveling control method in the embodiment corresponding to FIG. 25. For example, the central processing unit 2822 may be configured to: first, determine a game object, and obtain real-time status information of the game object, where the game object is an obstacle that has n road topologies, and $n \geq 2$; then determine, based on the real-time status information of the game object, an intent probability that the game object travels along each road topology, to obtain n intent probabilities; construct game sampling space for the game object based on real-time status information of an ego vehicle and the real-time status information of the game object, where the game sampling space includes m game strategies, and $m \geq 1$; then calculate strategy costs of the m game strategies in each road topology, to obtain n groups of strategy costs, where each group of strategy costs includes m strategy costs that are in a one-to-one correspondence with the m game strategies; and finally, determine, based on the n intent probabilities and the n groups of strategy costs, n target strategy costs corresponding to a total cost that meets a preset condition, and determine an outcome of decision-making of the ego vehicle based on a target game strategy, where the n target strategy costs are strategy costs of a target game strategy in all the road topologies, and the target game strategy is one of the m game strategies.

It should be noted that a specific manner in which the central processing unit 2822 performs the foregoing steps is based on a same concept as the method embodiment corresponding to FIG. 5 or FIG. 25 in this application. Technical effects brought by the manner are the same as those in embodiments in this application. For specific content, refer to the descriptions in the foregoing method embodiments in this application. Details are not described herein again.

Embodiments of this application further provide a computer-readable storage medium. The computer-readable storage medium stores a program for signal processing. When the program is run on a computer, the computer is enabled to perform the steps described in the embodiment of the foregoing FIG. 5 or FIG. 25.

The computing device provided in embodiments of this application may specifically include a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip in the computing device performs the steps described in the embodiment of FIG. 5 or FIG. 25.

Optionally, the storage unit is a storage unit in the chip, for example, a register or a cache; or the storage unit may be a storage unit that is in the radio access device end and that is located outside the chip, for example, a read-only memory (read-only memory, ROM), another type of static storage device that can store static information and instructions, or a random-access memory (random-access memory, RAM).

In addition, it should be noted that the described apparatus embodiments are merely examples. The units described as separate parts may be or may not be physically separate, and parts presented as units may be or may not be physical units, may be located at one position, or may be distributed on a plurality of network units. Some or all of the modules may be selected according to actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of software product. The computer software product is stored in a readable storage medium, for example, a floppy disk, a USB flash drive, a removable hard disk drive, a ROM, a RAM, a magnetic disk, or an optical disc of a computer, and includes several instructions for indicating a computer device (which may be a personal computer, a network device, or the like) to perform the methods described in embodiments of this application.

All or some of the foregoing embodiments may be implemented by using software, hardware, firmware, or any combination thereof. When software is used to implement the embodiments, all or a part of the embodiments may be implemented in a form of computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from a website, a computer, or a data center to another website, computer, or data center in a wired (for example, a coaxial cable, an optical fiber, or a digital subscriber line (DSL)) or wireless (for example, infrared, radio, or microwave) manner. The computer-readable storage medium may be any usable medium that may be stored by a computer, or a data storage device, for example, a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid-state disk, SSD)), or the like.

## Claims

1. An intelligent driving decision-making method, comprising:

   determining a game object, and obtaining real-time status information of the game object, wherein the game object is an obstacle that is identified by an ego vehicle and that has n road topologies, and $n \geq 2$;
   determining, based on the real-time status information of the game object, an intent probability that the game object travels along each road topology, to obtain n intent probabilities;
   constructing game sampling space for the game object based on real-time status information of the ego vehicle and the real-time status information of the game object, wherein the game sampling space comprises m game strategies, and m≥1;

calculating strategy costs of the m game strategies in each road topology, to obtain n groups of strategy costs, wherein each group of strategy costs comprises m strategy costs that are in a one-to-one correspondence with the m game strategies;

determining, based on the n intent probabilities and the n groups of strategy costs, n target strategy costs corresponding to a total cost that meets a preset condition, wherein the n target strategy costs are strategy costs of a target game strategy in all the road topologies, and the target game strategy is one of the m game strategies; and

determining an outcome of decision-making of the ego vehicle based on the target game strategy.

2. The method according to claim 1, wherein the determining, based on the real-time status information of the game object, an intent probability that the game object travels along each road topology comprises:

obtaining feature reference information of the game object in each road topology, wherein the feature reference information is used to describe a datum status of an intent of the game object to travel along each road topology in a current traffic environment status; and

determining, based on the real-time status information of the game object and the feature reference information, the intent probability that the game object travels along each road topology.

3. The method according to claim 2, wherein the determining, based on the real-time status information of the game object and the feature reference information, the intent probability that the game object travels along each road topology comprises:

obtaining a target eigenvector based on the real-time status information of the game object and the feature reference information;

determining a likelihood probability of the target eigenvector based on a probability density distribution dataset constructed in advance, wherein the probability density distribution dataset comprises probability density distribution of eigenvectors with different eigenvector values; and

determining, based on the likelihood probability, the intent probability that the game object travels along each road topology.

4. The method according to claim 3, wherein the probability density distribution dataset comprises:
a nonlinear probability density distribution dataset, wherein the nonlinear probability density distribution dataset comprises probability density distribution of eigenvectors with different speed values and different eigenvector values.

5. The method according to claim 3 or 4, wherein the determining, based on the likelihood probability, the intent probability that the game object travels along each road topology comprises:

obtaining a prior intent probability that the obstacle travels along each road topology; and

calculating, based on the likelihood probability and the prior intent probability by using a Bayesian inference algorithm, the intent probability that the game object travels along each road topology.

6. The method according to any one of claims 2 to 5, wherein

the feature reference information is obtained based on a target road point in each road topology; or

the feature reference information is obtained based on a road congestion degree and/or a radical degree of a traveling style of the game object.

7. The method according to any one of claims 2 to 6, wherein the real-time status information of the game object comprises at least any one or more of the following:

real-time position information of the game object, a real-time orientation angle of the game object, a real-time speed of the game object, and a real-time acceleration of the game object; and

the feature reference information comprises at least any one or more of the following:

reference position information of the game object, a reference orientation angle of the game object, a reference speed of the game object, and a reference acceleration of the game object.

8. The method according to claim 7, wherein when no obstacle other than the ego vehicle exists around the game object, a value of the reference speed of the game object is obtained through calculation based on a kinematic constraint on the game object and/or an environmental traffic constraint on the game object.

9. The method according to claim 8, wherein the kinematic constraint comprises at least any one or more of the following:

   a lane topology curvature speed limit, a start acceleration constraint, and a red-light deceleration constraint; and
   the environmental traffic constraint comprises at least any one or more of the following:
   a road speed limit of a lane in which the game object is located, a speed constraint on a preceding vehicle in the lane in which the game object is located, and a speed constraint on an obstacle in a lane other than the lane in which the game object is located.

10. The method according to claim 7, wherein when at least one first target obstacle located in front of the game object exists in the n road topologies, and a distance between the game object and the first target obstacle is shorter than a preset safe distance, the reference speed of the game object is obtained based on a speed of the first target obstacle.

11. The method according to claim 7, wherein when at least one second target obstacle exists in a traveling direction that is the same as that of the game object, and a road topology owned by the at least one second target obstacle does not belong to the n road topologies, the reference speed of the game object is obtained based on a datum speed of the at least one second target obstacle, and the datum speed is obtained according to a preset method.

12. The method according to claim 7, wherein when at least one third target obstacle exists in a crossing traveling direction of the game object, and a difference between moments at which the game object and the at least one third target obstacle reach a predicted collision point is greater than a preset threshold, the reference speed of the game object is the real-time speed of the game object.

13. The method according to claim 7, wherein when at least one third target obstacle exists in a crossing traveling direction of the game object, and a difference between moments at which the game object and the at least one third target obstacle reach a predicted collision point is less than or equal to a preset threshold, the reference speed of the game object is obtained based on the real-time speed of the game object, and the reference speed is lower than the real-time speed of the game object.

14. The method according to any one of claims 1 to 13, wherein the determining, based on the n intent probabilities and the n groups of strategy costs, n target strategy costs corresponding to a total cost that meets a preset condition comprises:

   respectively using the n intent probabilities as weights of the n road topologies, and calculating a weighted strategy cost corresponding to each game strategy in the n groups of strategy costs, to obtain m total costs;
   determining a total cost with a minimum value from the m total costs; and
   determining the n target strategy costs corresponding to the total cost with the minimum value.

15. The method according to any one of claims 1 to 14, wherein the calculating strategy costs of the m game strategies in each road topology comprises:

   determining factors of the strategy costs of the m game strategies in each road topology, wherein the factors of the strategy costs comprise at least one of safety, comfort, trafficability, a right of way, a horizontal offset, a risk area, and an inter-frame association;
   calculating a factor cost of each factor in each strategy cost; and
   weighting the factor cost of each factor in each strategy cost, to obtain the strategy costs of the m game strategies in each road topology.

16. The method according to any one of claims 1 to 15, wherein the constructing game sampling space for the game object based on real-time status information of the ego vehicle and the real-time status information of the game object comprises:

   determining a decision-making upper limit and a decision-making lower limit of the ego vehicle and the game object based on the real-time status information of the ego vehicle and the real-time status information of the game object;
   obtaining a decision-making strategy of the ego vehicle and a decision-making strategy of the game object from the decision-making upper limit and the decision-making lower limit according to a preset rule; and
combining the decision-making strategy of the ego vehicle and the decision-making strategy of the game object, to obtain the m game strategies of the ego vehicle and the game object, wherein the m game strategies belong to the game sampling space.

17. The method according to any one of claims 1 to 16, wherein the determining a game object comprises:

obtaining all road topologies in a range of a preset area around the ego vehicle;
obtaining obstacle information of at least one obstacle around the ego vehicle, and calculating a road topology of the at least one obstacle based on the obstacle information and all the road topologies; and
determining, from the at least one obstacle, the obstacle having the n road topologies as the game object.

18. A decision-making apparatus, comprising:

an obtaining module, configured to: determine a game object, and obtain real-time status information of the game object, wherein the game object is an obstacle that is identified by an ego vehicle and that has n road topologies, and n≥2;
an intent inference module, configured to determine, based on the real-time status information of the game object, an intent probability that the game object travels along each road topology, to obtain n intent probabilities;
a construction module, configured to construct game sampling space for the game object based on real-time status information of the ego vehicle and the real-time status information of the game object, wherein the game sampling space comprises m game strategies, and m≥1;
a calculation module, configured to calculate strategy costs of the m game strategies in each road topology, to obtain n groups of strategy costs, wherein each group of strategy costs comprises m strategy costs that are in a one-to-one correspondence with the m game strategies;
a determining module, configured to determine, based on the n intent probabilities and the n groups of strategy costs, n target strategy costs corresponding to a total cost that meets a preset condition, wherein the n target strategy costs are strategy costs of a target game strategy in all the road topologies, and the target game strategy is one of the m game strategies; and
a decision-making module, configured to determine an outcome of decision-making of the ego vehicle based on the target game strategy.

19. The apparatus according to claim 18, wherein the intent inference module is specifically configured to:

obtain feature reference information of the game object in each road topology, wherein the feature reference information is used to describe a datum status of an intent of the game object to travel along each road topology in a current traffic environment status; and
determine, based on the real-time status information of the game object and the feature reference information, the intent probability that the game object travels along each road topology.

20. The apparatus according to claim 19, wherein the intent inference module is further specifically configured to:

obtain a target eigenvector based on the real-time status information of the game object and the feature reference information;
determine a likelihood probability of the target eigenvector based on a probability density distribution dataset constructed in advance, wherein the probability density distribution dataset comprises probability density distribution of eigenvectors with different eigenvector values; and
determine, based on the likelihood probability, the intent probability that the game object travels along each road topology.

21. The apparatus according to claim 20, wherein the probability density distribution dataset comprises:
a nonlinear probability density distribution dataset, wherein the nonlinear probability density distribution dataset comprises probability density distribution of eigenvectors with different speed values and different eigenvector values.

22. The apparatus according to claim 20 or 21, wherein the intent inference module is further specifically configured to:

obtain a prior intent probability that the obstacle travels along each road topology; and
calculate, based on the likelihood probability and the prior intent probability by using a Bayesian inference algorithm, the intent probability that the game object travels along each road topology.

23. The apparatus according to any one of claims 19 to 22, wherein

the feature reference information is obtained based on a target road point in each road topology; or
the feature reference information is obtained based on a road congestion degree and/or a radical degree of a traveling style of the game object.

24. The apparatus according to any one of claims 19 to 23, wherein the real-time status information of the game object comprises at least any one or more of the following:

real-time position information of the game object, a real-time orientation angle of the game object, a real-time speed of the game object, and a real-time acceleration of the game object; and
the feature reference information comprises at least any one or more of the following:
reference position information of the game object, a reference orientation angle of the game object, a reference speed of the game object, and a reference acceleration of the game object.

25. The apparatus according to claim 24, wherein when no obstacle other than the ego vehicle exists around the game object, a value of the reference speed of the game object is obtained through calculation based on a kinematic constraint on the game object and/or an environmental traffic constraint on the game object.

26. The apparatus according to claim 25, wherein the kinematic constraint comprises at least any one or more of the following:

a lane topology curvature speed limit, a start acceleration constraint, and a red-light deceleration constraint; and
the environmental traffic constraint comprises at least any one or more of the following:
a road speed limit of a lane in which the game object is located, a speed constraint on a preceding vehicle in the lane in which the game object is located, and a speed constraint on an obstacle in a lane other than the lane in which the game object is located.

27. The apparatus according to claim 24, wherein when at least one first target obstacle located in front of the game object exists in the n road topologies, and a distance between the game object and the first target obstacle is shorter than a preset safe distance, the reference speed of the game object is obtained based on a speed of the first target obstacle.

28. The apparatus according to claim 24, wherein when at least one second target obstacle exists in a traveling direction that is the same as that of the game object, and a road topology owned by the at least one second target obstacle does not belong to the n road topologies, the reference speed of the game object is obtained based on a datum speed of the at least one second target obstacle, and the datum speed is obtained according to a preset method.

29. The apparatus according to claim 24, wherein when at least one third target obstacle exists in a crossing traveling direction of the game object, and a difference between moments at which the game object and the at least one third target obstacle reach a predicted collision point is greater than a preset threshold, the reference speed of the game object is the real-time speed of the game object.

30. The apparatus according to claim 24, wherein when at least one third target obstacle exists in a crossing traveling direction of the game object, and a difference between moments at which the game object and the at least one third target obstacle reach a predicted collision point is less than or equal to a preset threshold, the reference speed of the game object is obtained based on the real-time speed of the game object, and the reference speed is lower than the real-time speed of the game object.

31. The apparatus according to any one of claims 18 to 30, wherein the determining module is specifically configured to:

respectively use the n intent probabilities as weights of the n road topologies, and calculate a weighted strategy cost corresponding to each game strategy in the n groups of strategy costs, to obtain m total costs;
determine a total cost with a minimum value from the m total costs; and
determine the n target strategy costs corresponding to the total cost with the minimum value.

32. The apparatus according to any one of claims 18 to 31, wherein the calculation module is specifically configured to:

determine factors of the strategy costs of the m game strategies in each road topology, wherein the factors of the strategy costs comprise at least one of safety, comfort, trafficability, a right of way, a horizontal offset, a risk area, and an inter-frame association;

calculate a factor cost of each factor in each strategy cost; and

weight the factor cost of each factor in each strategy cost, to obtain the strategy costs of the m game strategies in each road topology.

33. The apparatus according to any one of claims 18 to 32, wherein the construction module is specifically configured to:

determine a decision-making upper limit and a decision-making lower limit of the ego vehicle and the game object based on the real-time status information of the ego vehicle and the real-time status information of the game object;

obtain a decision-making strategy of the ego vehicle and a decision-making strategy of the game object from the decision-making upper limit and the decision-making lower limit according to a preset rule; and

combine the decision-making strategy of the ego vehicle and the decision-making strategy of the game object, to obtain the m game strategies of the ego vehicle and the game object, wherein the m game strategies belong to the game sampling space.

34. The apparatus according to any one of claims 18 to 33, wherein the obtaining module is specifically configured to:

obtain all road topologies in a range of a preset area around the ego vehicle;

obtain obstacle information of at least one obstacle around the ego vehicle, and calculate a road topology of the at least one obstacle based on the obstacle information and all the road topologies; and

determine, from the at least one obstacle, the obstacle having the n road topologies as the game object.

35. A vehicle traveling control method, comprising:

obtaining an obstacle outside a vehicle;

for the obstacle, determining an outcome of decision-making for traveling of the vehicle according to the method according to any one of claims 1 to 17; and

controlling traveling of the vehicle based on the outcome of decision-making.

36. A vehicle traveling control apparatus, comprising:

an obtaining module, configured to obtain an obstacle outside a vehicle; and

a processing module, configured to: for the obstacle, determine an outcome of decision-making for traveling of the vehicle according to the method according to any one of claims 1 to 17, wherein

the processing module is further configured to control traveling of the vehicle based on the outcome of decision-making.

37. A vehicle, comprising:

the vehicle traveling control apparatus according to claim 36 and a traveling system, wherein

the vehicle traveling control apparatus controls the traveling system.

38. A computing device, comprising a processor and a memory, wherein the processor is coupled to the memory;

the memory is configured to store a program; and

the processor is configured to execute the program in the memory, to enable the computing device to perform the method according to any one of claims 1 to 17, or enable the computing device to perform the method according to claim 35.

39. An intelligent driving system, comprising a sensing system and a processor, wherein the processor is configured to perform the method according to any one of claims 1 to 17, or the processor is configured to perform the method according to claim 35.

40. A computer-readable storage medium, comprising a program, wherein when the program is run on a computer, the computer is enabled to perform the method according to any one of claims 1 to 17, or the computer is enabled to perform the method according to claim 35.

41. A computer program product comprising instructions, wherein when the computer program product runs on a computer, the computer is enabled to perform the method according to any one of claims 1 to 17, or the computer is enabled to perform the method according to claim 35.

42. A chip, wherein the chip comprises a processor and a data interface, and the processor reads, through the data interface, instructions stored in a memory, to perform the method according to any one of claims 1 to 17 or the method according to claim 35.

FIG. 1

Upstream module

Perception and fusion module

Prediction module

Reference path of an ego vehicle

Obstacle information

Object decision-making module

Game object filtering

Game object

Game decision-making

Rule decision-making

Conflict resolution

Non-game object

Outcome of object decision-making

Motion planning module

Horizontal planning

Speed planning

EP 4 585 484 A1

FIG. 2

Ego vehicle

Social vehicle

Road topology

Lane divider

Predicted track of the
social vehicle

Reference path of the ego
vehicle

Ego
vehicle

FIG. 3

Ego vehicle

Social vehicle

Road topology

Lane divider

Predicted track of the
social vehicle

Reference path of the ego
vehicle

Ego
vehicle

FIG. 4

Determine a game object, and obtain real-time status information of the game object, where the game object is an obstacle that is identified by an ego vehicle and that has n road topologies, and n≥2 — 501

Determine, based on the real-time status information of the game object, an intent probability that the game object travels along each road topology, to obtain n intent probabilities — 502

Construct game sampling space for the game object based on real-time status information of the ego vehicle and the real-time status information of the game object, where the game sampling space includes m game strategies, and m≥1 — 503

Calculate strategy costs of the m game strategies in each road topology, to obtain n groups of strategy costs, where each group of strategy costs includes m strategy costs that are in a one-to-one correspondence with the m game strategies — 504

Determine, based on the n intent probabilities and the n groups of strategy costs, n target strategy costs corresponding to a total cost that meets a preset condition, and determine an outcome of decision-making of the ego vehicle based on a target game strategy, where the n target strategy costs are strategy costs of the target game strategy in all the road topologies, and the target game strategy is one of the m game strategies — 505

FIG. 5

FIG. 6

Ego vehicle

Social vehicle

Road topology

Lane divider

Game object

Obj 2

Obj 5

$r^{(1)}$

Obj 6

Obj 1

Obj 3

$r^{(2)}$

Obj 4

Ego
vehicle

FIG. 7

V=Q km/h (for example, 8.0 km/h)

$P\left(f_{k,pos} \mid r^{(2)}\right)$

Straight-through probability density

Straight-through

Actual value | Straight-through reference value

$f_{k,pos}$

Position probability density distribution $f_{pos} \mid r^{(2)}$

$P\left(f_{k,\theta} \mid r^{(2)}\right)$

Straight-through probability density

Actual value | Straight-through reference value

$f_{k,\theta}$

Orientation angle probability density distribution $f_\theta \mid r^{(2)}$

$P\left(f_{k,v} \mid r^{(2)}\right)$

Straight-through probability density

Straight-through reference value | Actual value

$f_{k,v}$

Speed probability density distribution $f_v \mid r^{(2)}$

V=Q km/h (for example, 8.0 km/h)

$P\left(f_{k,pos} \mid r^{(1)}\right)$

Left-turn probability density

Left-turn

Left-turn reference value | Actual value

$f_{k,pos}$

Position probability density distribution $f_{pos} \mid r^{(1)}$

$P\left(f_{k,\theta} \mid r^{(1)}\right)$

Left-turn probability density

Left-turn reference value | Actual value

$f_{k,\theta}$

Orientation angle probability density distribution $f_\theta \mid r^{(1)}$

$P\left(f_{k,v} \mid r^{(1)}\right)$

Left-turn probability density

Left-turn reference value | Actual value

$f_{k,v}$

Speed probability density distribution $f_v \mid r^{(1)}$

(a)                                    (b)                                    (c)

FIG. 8

FIG. 9

EP 4 585 484 A1

FIG. 10

FIG. 11

FIG. 12

Game object

Ego vehicle

FIG. 13

Horizontal offset of an ego vehicle

| Position offset | -3 | -2 | -1 | 0 | 1 | 2 | 3 |
|---|---|---|---|---|---|---|---|
| -3 | ... | ... | ... | ... | ... | ... | ... |
| -2 | ... | ... | ... | ... | ... | ... | ... |
| -1 | ... | ... | ... | ... | ... | ... | ... |
| 0 | ... | ... | ... | ... | ... | ... | ... |
| 1 | ... | ... | ... | ... | ... | ... | ... |
| 2 | ... | ... | ... | ... | ... | ... | ... |
| 3 | ... | ... | ... | ... | ... | ... | ... |

Horizontal offset of a game vehicle

Acceleration absolute value (acc) of the ego vehicle

| acc | -4 | -3 | -2 | -1 | 0 | 1 | 2 | 3 |
|---|---|---|---|---|---|---|---|---|
| -4 | ... | ... | ... | ... | ... | ... | ... | ... |
| -3 | ... | ... | ... | ... | ... | ... | ... | ... |
| -2 | ... | ... | ... | ... | ... | ... | ... | ... |
| -1 | ... | ... | ... | ... | ... | ... | ... | ... |
| 0 | ... | ... | ... | ... | ... | ... | ... | ... |
| 1 | ... | ... | ... | ... | ... | ... | ... | ... |
| 2 | ... | ... | ... | ... | ... | ... | ... | ... |
| 3 | ... | ... | ... | ... | ... | ... | ... | ... |

Acceleration absolute value (acc) of the game object

FIG. 14

Safety cost ($c_{dist}$)

FIG. 15

Comfort cost ($c_{com}$)

FIG. 16

Trafficability cost ($c_{pass}$)

FIG. 17

Right-of-way cost ($c_{road}$)

FIG. 18

FIG. 19

FIG. 20

| acc | −4 | −3 | −2 | −1 | 0 | 1 | 2 | 3 |
|---|---|---|---|---|---|---|---|---|
| −4 | 0 | 0 | 0 | −1 | −1 | −1 | $c_{yield}$ | $c_{yield}$ |
| −3 | 0 | 0 | 0 | −1 | −1 | −1 | −1 | $c_{yield}$ |
| −2 | 0 | 0 | 0 | −1 | −1 | −1 | −1 | −1 |
| −1 | −1 | −1 | −1 | −1 | −1 | −1 | −1 | −1 |
| 0 | $c_{grab}$ | −1 | −1 | −1 | −1 | −1 | −1 | −1 |
| 1 | $c_{grab}$ | $c_{grab}$ | $c_{grab}$ | −1 | −1 | −1 | −1 | −1 |
| 2 | $c_{grab}$ | $c_{grab}$ | $c_{grab}$ | $c_{grab}$ | −1 | −1 | −1 | −1 |
| 3 | $c_{grab}$ | $c_{grab}$ | $c_{grab}$ | $c_{grab}$ | $c_{grab}$ | −1 | −1 | −1 |

Ego vehicle

Crossing game object

FIG. 21

Acceleration absolute value (acc) of the ego vehicle

| acc | -4 | -3 | -2 | -1 | 0 | 1 | 2 | 3 |
|-----|----|----|----|----|---|---|---|---|
| -4 | 0 | 0 | 0 | 0 | 1 | 1 | 1 | 1 |
| -3 | 0 | 0 | 0 | 0 | 1 | 1 | 1 | 1 |
| -2 | 0 | 0 | 0 | 0 | 1 | 1 | 1 | 1 |
| -1 | 0 | 0 | 0 | 0 | 1 | 1 | 1 | 1 |
| 0 | 1 | 1 | 1 | 1 | 1 | 1 | 1 | 1 |
| 1 | 1 | 1 | 1 | 1 | 1 | 1 | 1 | 1 |
| 2 | 1 | 1 | 1 | 1 | 1 | 1 | 1 | 1 |
| 3 | 1 | 1 | 1 | 1 | 1 | 1 | 1 | 1 |

Acceleration absolute value (acc) of the game object

Horizontal offset of an ego vehicle

| Position offset | -3 | -2 | -1 | 0 | 1 | 2 | 3 |
|-----------------|----|----|----|---|---|---|---|
| -3 | ... | ... | ... | ... | ... | ... | ... |
| -2 | ... | ... | ... | ... | ... | ... | ... |
| -1 | ... | ... | ... | ... | ... | ... | ... |
| 0 | ... | ... | ... | ... | ... | ... | ... |
| 1 | ... | ... | ... | ... | ... | ... | ... |
| 2 | ... | ... | ... | ... | ... | ... | ... |
| 3 | ... | ... | ... | ... | ... | ... | ... |

Horizontal offset of a game vehicle

FIG. 22

53

| | S0 | Identification of an intent-indeterminate object |

List of target objects

| | S1 | Identification of a lane topology of a traffic participant |

Lane distribution of a target object

Intent inference

| | S2 | Generation of reference information of the target object | | | S3 | Inference on an intent probability of the target object |

Kinematic constraint

Environmental constraint

Empirical data

Generation of a reference position
Generation of a reference orientation angle
Generation of a reference speed
Generation of a reference acceleration
...

Generation of a target eigenvector

Generation of probability density distribution

➤ Generation of a probability density

➤ Probability output (generation of an intent)

Prior probability

Expert data AI prior

Multi-intent probability of the target object

| | S4 | Solution of indeterminate interactive game decision-making |

FIG. 23

Decision-making apparatus 2400

2401

Obtaining
module

2402

Intent inference
module

2403

Construction
module

2406

Decision-making
module

2405

Determining
module

2404

Calculation
module

FIG. 24

Obtain an obstacle outside a vehicle
2501

Determine, for the obstacle, an outcome of decision-making for traveling
of the vehicle
2502

Control traveling of the vehicle based on the outcome of decision-making
2503

FIG. 25

Vehicle traveling control apparatus 2600

2601

Obtaining module

2602

Processing module

FIG. 26

Vehicle 2700

2600

Vehicle traveling
control apparatus

2701

Traveling system

FIG. 27

FIG. 28

## INTERNATIONAL SEARCH REPORT

| International application No. |
| --- |
| **PCT/CN2023/103770** |

### A. CLASSIFICATION OF SUBJECT MATTER

B60W60/00(2020.01)i

According to International Patent Classification (IPC) or to both national classification and IPC

### B. FIELDS SEARCHED

Minimum documentation searched (classification system followed by classification symbols)

IPC:B60W

Documentation searched other than minimum documentation to the extent that such documents are included in the fields searched

Electronic data base consulted during the international search (name of data base and, where practicable, search terms used)

CNABS, CNTXT, CNKI, VEN, ENTXT: 自动, 智能, 驾驶, 博弈, 决策, 策略, 意图; auto, intelligent, drive, game, determine, decision, strategy, intention

### C. DOCUMENTS CONSIDERED TO BE RELEVANT

| Category* | Citation of document, with indication, where appropriate, of the relevant passages | Relevant to claim No. |
| --- | --- | --- |
| PX | CN 115503756 A (HUAWEI TECHNOLOGIES CO., LTD.) 23 December 2022 (2022-12-23) claims 1-42 | 1-42 |
| A | CN 114919578 A (INSTITUTE OF ADVANCED TECHNOLOGY, BEIJING INSTITUTE OF TECHNOLOGY et al.) 19 August 2022 (2022-08-19) description, paragraphs 32-108 | 1-42 |
| A | CN 112907967 A (JILIN UNIVERSITY) 04 June 2021 (2021-06-04) entire document | 1-42 |
| A | WO 2021196879 A1 (HUAWEI TECHNOLOGIES CO., LTD.) 07 October 2021 (2021-10-07) entire document | 1-42 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 September 2023** | **24 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/103770** |

| Patent document cited in search report | | | Publication date (day/month/year) | Patent family member(s) | | | Publication date (day/month/year) |
| --- | --- | --- | --- | --- | --- | --- | --- |
| CN | 115503756 | A | 23 December 2022 | None | | | |
| CN | 114919578 | A | 19 August 2022 | None | | | |
| CN | 112907967 | A | 04 June 2021 | None | | | |
| WO | 2021196879 | A1 | 07 October 2021 | EP | 4129789 | A1 | 08 February 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211214482